(19) Europäisches Patentamt
European Patent Office
Office européen des brevets

(11) **EP 4 481 459 A1**

(12) **EUROPEAN PATENT APPLICATION**
published in accordance with Art. 153(4) EPC

(43) Date of publication:
25.12.2024 Bulletin 2024/52

(21) Application number: 22927477.4

(22) Date of filing: 16.12.2022

(51) International Patent Classification (IPC):
G02B 13/00 (2006.01)        G02B 9/64 (2006.01)
G02B 13/18 (2006.01)        G03B 17/12 (2021.01)
H04N 23/00 (2023.01)

(52) Cooperative Patent Classification (CPC):
G02B 9/64; G02B 13/00; G02B 13/18; G03B 17/12;
H04N 23/00

(86) International application number:
PCT/KR2022/020563

(87) International publication number:
WO 2023/158081 (24.08.2023 Gazette 2023/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.02.2022 KR 20220021449
23.03.2022 KR 20220035809

(71) Applicant: Samsung Electronics Co., Ltd
Suwon-si, Gyeonggi-do 16677 (KR)

(72) Inventors:
• SEO, Jungpa
Suwon-si Gyeonggi-do 16677 (KR)

• SON, Juhwa
Suwon-si Gyeonggi-do 16677 (KR)
• LEE, Jeongyeol
Suwon-si Gyeonggi-do 16677 (KR)
• CHOI, Sungwook
Suwon-si Gyeonggi-do 16677 (KR)
• KIM, Haneung
Suwon-si Gyeonggi-do 16677 (KR)
• LEE, Kihuk
Suwon-si Gyeonggi-do 16677 (KR)

(74) Representative: Arnold & Siedsma
Bezuidenhoutseweg 57
2594 AC The Hague (NL)

(54) **LENS ASSEMBLY AND ELECTRONIC DEVICE COMPRISING SAME**

(57) According to an embodiment of the present disclosure, a lens assembly and/or an electronic device including same comprise at least seven lenses sequentially arranged along an optical axis direction from an object side to an image sensor side. Among the at least seven lenses, a first lens disposed first from the object side is a plastic lens including a convex surface at the object side and having positive refractive power; a second lens disposed second has negative refractive power; a third lens disposed third has a surface at the object side, the surface having a maximum value among the absolute values of the sweep angle, which is 10 degrees or less; a fifth lens disposed fifth has a surface at the object side and a surface at the image sensor side, of which at least one has a maximum value among the absolute values of the sweep angle, which is 45 degrees or greater; a sixth lens disposed sixth includes a concave surface at the image sensor side, wherein a maximum value among the absolute values of the sweep angle of at least one of a surface at the object side and a surface at the image sensor side of the sixth lens is 45 degrees or greater; and a seventh lens disposed seventh is a lens having negative refractive power, and includes a surface at the object side, the surface being aspherical and convex and having at least one inflection point, and a surface at the image sensor side, the surface being aspherical and concave and having at least one inflection point; and one of lens surfaces of the at least seven lenses may have a visible light reflectance of 0.3% or less. Various other embodiments are possible.

**FIG. 5**

**Description**

[Technical Field]

Embodiment(s) of the disclosure relate to a lens assembly, for example, a lens assembly including a plurality of lenses and an electronic device including the same.

[Background Art]

Optical devices, for example, cameras capable of capturing images or videos have been widely used, and digital cameras or video cameras with solid-state image sensors such as charge coupled devices (CCDs) or complementary metal-oxide semiconductors (CMOS) have become common in recent years. Optical devices with solid-state image sensors (CCDs or CMOSs) have been gradually replacing film-based optical devices, because they allow for easier storage, duplication, and movement of images than the film-based optical devices.

Recently, a plurality of optical devices, for example, two or more selected ones of a close-up camera, a telephoto camera, and/or a wide-angle camera have been mounted in a single electronic device to improve the quality of a captured image and provide various visual effects to the captured image. For example, a plurality of cameras with different optical characteristics may be used to obtain images of a subject and synthesize them to obtain a high-quality captured image. As electronic devices such as a mobile communication terminal or a smartphone are equipped with a plurality of optical devices (e.g., cameras) and thus obtain a high-quality captured image, they are gradually replacing electronic devices specialized for a shooting function, such as digital compact cameras, and are expected to replace high-performance cameras such as digital single-lens reflex cameras in the future.

The above information is presented as background information only to assist with an understanding of the disclosure. No determination has been made, and no assertion is made, as to whether any of the above might be applicable as prior art with regard to the disclosure.

[Detailed Description of the Invention]

[Technical Solution]

A lens assembly and/or an electronic device including the same according to an embodiment of the disclosure includes at least seven lenses sequentially arranged along a direction of an optical axis from an object side to an image sensor side. A first lens disposed first from the side of the object among the at least seven lenses is a plastic lens including a convex object-side surface and having a positive refractive power, a second lens disposed second from the object side among the at least seven lenses has a negative refractive power, an object-side surface of a third lens disposed third from the object side among the at least seven lenses has a maximum absolute value of a sweep angle of 10 degrees or less, at least one of an object-side surface or an image sensor-side surface of a fifth lens disposed fifth from the object side among the at least seven lenses has a maximum absolute value of a sweep angle of 45 degrees or larger, a sixth lens disposed sixth from the object side among the at least seven lenses includes a concave image sensor side-surface, at least one of an object-side surface or the image sensor-side surface of the sixth lens has a maximum absolute value of a sweep angle of 45 degrees or larger, a seventh lens disposed seventh from the object side among the at least seven lenses is a lens having a negative refractive power, and includes an aspheric and convex object side-surface having at least one inflection point and an aspheric and concave image sensor side-surface having at least one inflection point, and at least one of the lens surfaces of the at least seven lenses has a visible light reflectance of 0.3% or less.

A lens assembly and/or an electronic device including the same according to an embodiment of the disclosure includes at least seven lenses sequentially arranged along a direction of an optical axis from an object side to an image sensor side. A first lens disposed first from the object side among the at least seven lenses includes a convex object-side surface and a convex image sensor-side surface, and has a positive refractive power, a second lens disposed second from the object side among the at least seven lenses has a negative refractive power, a third lens disposed third from the object side among the at least seven lenses includes a convex image sensor-side surface, a fourth lens disposed fourth from the object side among the at least seven lenses has a refractive index of 1.6 or larger, a fifth lens disposed fifth from the object side among the at least seven lenses includes a concave image sensor-side surface, a sixth lens disposed sixth from the object side among the at least seven lenses includes at least one inflection point on at least one of an object-side surface or an image sensor-side surface thereof, and a seventh lens disposed seventh from the object side among the at least seven lenses is a lens having a negative refractive power and an abbe number of 50 or larger, and includes an aspheric and convex object side-surface having at least one inflection point and an aspheric and concave image sensor side-surface having at least one inflection point. The lens assembly and/or the electronic device including the same satisfies [Conditional Expression 10] below,

[Conditional Expression 10]

$$1.7 \leq Fno \leq 2.0$$

Herein, 'Fno' is an F-number of the lens assembly.

According to an embodiment, an electronic device includes at least seven lenses sequentially arranged along a direction of an optical axis from an object side to an image sensor side, the image sensor aligned with the at least seven lenses on the optical axis and configured to receive light focused or guided by the at least seven lenses, and a processor configured to obtain an image based on the light received by the image sensor. A first lens disposed first from the object side among the at least seven lenses is a plastic lens including a convex object-side surface and having a positive refractive power, a second lens disposed second from the object side among the at least seven lenses has a negative refractive power, an object-side surface of a third lens disposed third from the object side among the at least seven lenses has a maximum absolute value of a sweep angle of 10 degrees or less, at least one of an object-side surface or an image sensor-side surface of a fifth lens disposed fifth from the object side among the at least seven lenses has a maximum absolute value of a sweep angle of 45 degrees or larger, at least one of an object-side surface or an image sensor-side surface of a sixth lens disposed sixth from the object side among the at least seven lenses has a maximum absolute value of a sweep angle of 45 degrees or larger, a seventh lens disposed seventh from the object side among the at least seven lenses is a lens having a negative refractive power, and includes an aspheric and convex object side-surface having at least one inflection point and an aspheric and concave image sensor side-surface having at least one inflection point, and at least one of the lens surfaces of the at least seven lenses has a visible light reflectance of 0.3% or less.

[Brief Description of Drawings]

The above or other aspects, configurations, and/or advantages of embodiment(s) of the disclosure will be more apparent from the following detailed description with reference to the accompanying drawings.

FIG. 1 is a block diagram illustrating an electronic device in a network environment according to an embodiment of the disclosure.
FIG. 2 is a block diagram illustrating an exemplary camera module according to an embodiment of the disclosure.
FIG. 3 is a perspective view illustrating a front surface of an electronic device according to an embodiment of the disclosure.
FIG. 4 is a perspective view illustrating a rear surface of the electronic device illustrated in FIG. 3.
FIG. 5 is a configuration diagram illustrating a lens assembly according to an embodiment of the disclosure.
FIG. 6A is a graph depicting spherical aberration of a lens assembly according to an embodiment of the disclosure.
FIG. 6B is a graph depicting astigmatism of a lens assembly according to an embodiment of the disclosure.
FIG. 6C is a graph depicting distortion rates of a lens assembly according to an embodiment of the disclosure.
FIG. 7 is a configuration diagram illustrating a lens assembly according to an embodiment of the disclosure.
FIG. 8A is a graph depicting spherical aberration of a lens assembly according to an embodiment of the disclosure.
FIG. 8B is a graph depicting astigmatism of a lens assembly according to an embodiment of the disclosure.
FIG. 8C is a graph depicting distortion rates of a lens assembly according to an embodiment of the disclosure.
FIG. 9 is a configuration diagram illustrating a lens assembly according to an embodiment of the disclosure.
FIG. 10A is a graph depicting spherical aberration of a lens assembly according to an embodiment of the disclosure.
FIG. 10B is a graph depicting astigmatism of a lens assembly according to an embodiment of the disclosure.
FIG. 10C is a graph depicting distortion rates of a lens assembly according to an embodiment of the disclosure.
FIG. 11 is a configuration diagram illustrating a lens assembly according to an embodiment of the disclosure.
FIG. 12A is a graph depicting spherical aberration of a lens assembly according to an embodiment of the disclosure.
FIG. 12B is a graph depicting astigmatism of a lens assembly according to an embodiment of the disclosure.
FIG. 12C is a graph depicting distortion rates of a lens assembly according to an embodiment of the disclosure.

Throughout the accompanying drawings, like reference numerals may be assigned to like parts, components, and/or structures.

[Mode for Carrying out the Invention]

In a high-performance camera such as a single-lens reflex camera, a large-sized image sensor of approximately 1/1.2 inch to 1 inch may be used, and the performance of the camera or the quality of a captured image may be improved in proportion to the size of the image sensor. This high-performance camera may obtain a high-quality image by including a lens assembly corresponding to the size and performance of the image sensor. For example, to improve field curvature or control aberration while meeting the design performance of the large-sized image sensor, lens(es) forming the lens assembly may be increased in size and number. However, it may be difficult to secure a lens assembly matching the performance of a large-sized image sensor for a miniaturized electronic device such as a smartphone because the number or size of lenses in an optical system may be limited. Moreover, when the electronic device has a limited number of (e.g., approximately 7) lenses, it may be difficult to secure optical performance such as brightness (e.g., F-number), hand tremor correction performance, field curvature, or aberration control, although the lens assembly may be easily miniaturized.

Embodiment(s) of the disclosure are intended to address at least the problems and/or disadvantages described above and provide at least the advantages described later, and may provide a lens assembly that provides good optical performance while being miniaturized and/or an electronic device including the same.

Additional aspects according to various embodiments will be set forth throughout the following detailed description, and will be apparent in part from the description or may be understood through an embodiment of a presented implementation.

The following description in conjunction with the accompanying drawings may provide an understanding of various exemplary implementations of the disclosure including the claims and their corresponding content. Although an exemplary embodiment disclosed in the following description includes various specific details to aid understanding, this is considered to be one of various exemplary embodiments. Therefore, it is obvious to those skilled in the art that various changes and modifications may be made to various implementations of the disclosure without departing from the scope and spirit of the disclosure. Additionally, for clarity and conciseness, a description of well-known functions and configurations may be avoided.

The terms and words used in the following description and claims may be used to clearly and consistently describe various embodiments of the disclosure, not limited to referential meanings. Accordingly, it will be obvious to those skilled in the art that the following description of various implementations of the disclosure is provided for illustrative purposes, not for the purpose of limiting the disclosure defined by the claims and their equivalents.

Unless the context clearly dictates otherwise, the singular forms "a", "an", and "the" should be understood to include plural meanings. Therefore, for example, a "component surface" may be understood to include one or more of the surfaces of the component.

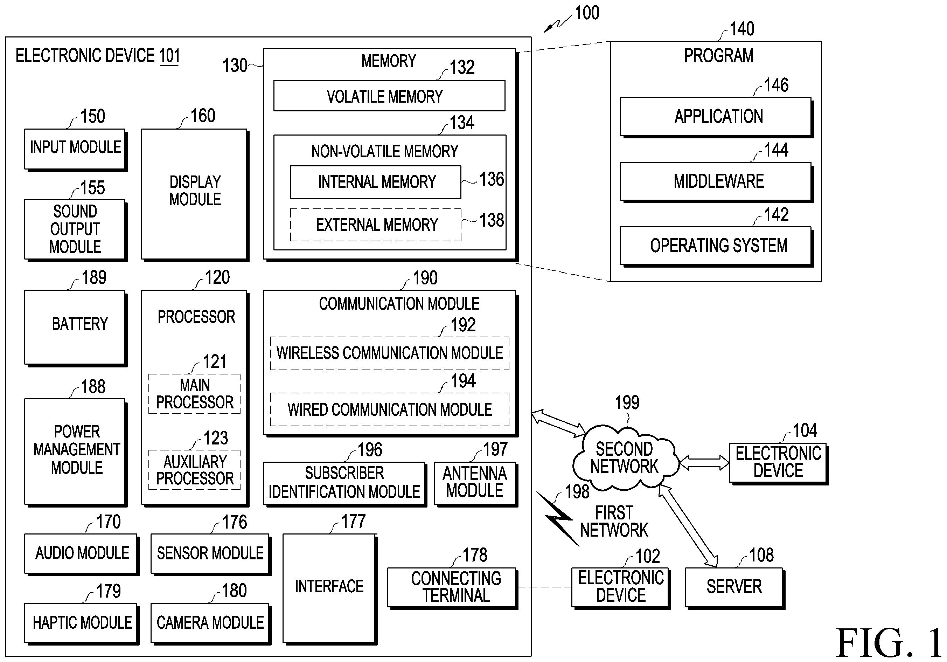

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

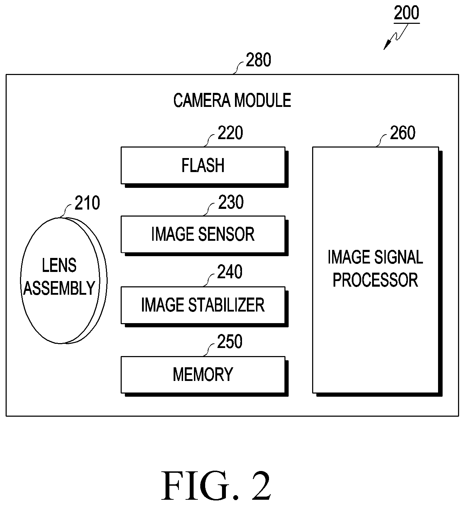

FIG. 2 is a block diagram 200 illustrating a camera module 280 (e.g., the camera module 180 in FIG. 1) according to various embodiments. Referring to FIG. 2, the camera module 280 may include a lens assembly 210, a flash 220, an image sensor 230, an image stabilizer 240, memory 250 (e.g., buffer memory), or an image signal processor 260. In some embodiments, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect (e.g., image blurring) by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

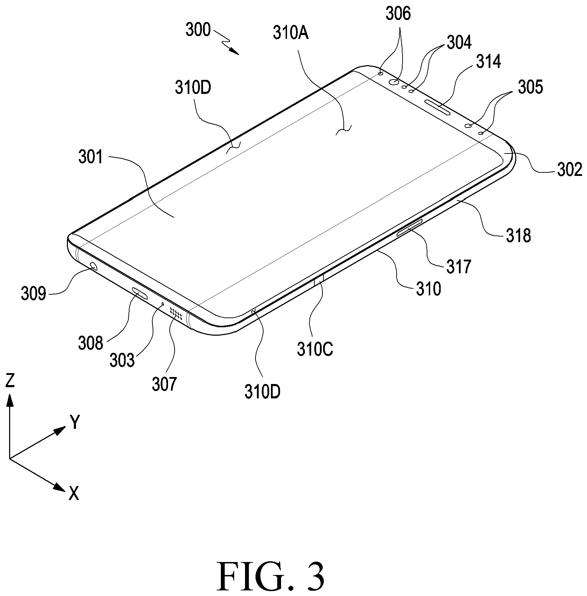

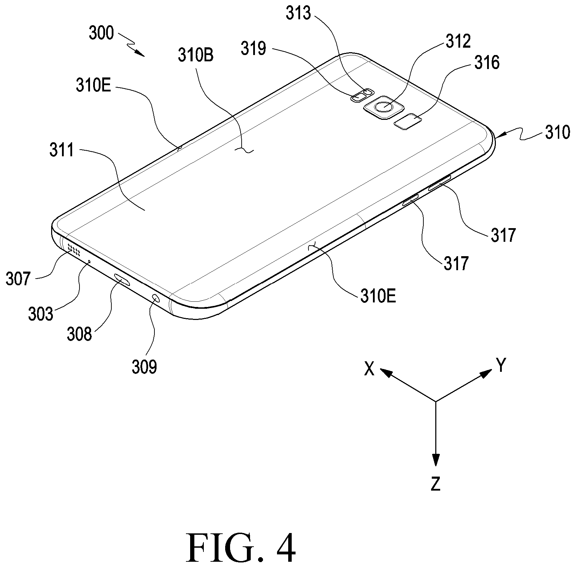

FIG. 3 is a perspective view illustrating a front surface of an electronic device 300 (e.g., the electronic device 101 in FIG. 1) according to an embodiment of the disclosure. FIG. 4 is a perspective view illustrating a rear surface of the electronic device 300 illustrated in FIG. 3.

Referring to FIGS. 3 and 4, the electronic device 300 (e.g., the electronic device 101 in FIG. 1) according to an embodiment may include a housing 310 which includes a first surface (or front surface) 310A, a second surface (or rear surface) 310B, and a side surface 310C surrounding a space between the first surface 310A and the second surface 310B. In another embodiment (not shown), the housing 310 may refer to a structure that forms a portion of the first surface 310A, the second surface 310B, and the side surfaces 310C of FIG. 3. According to another embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an inner space with the housing 310. In an embodiment, the term 'inner space' may refer to an interior space of the housing 310 that accommodates at least a portion of a display 301 to be described later or the display module 160 of FIG. 1.

According to an embodiment, the second surface 310B may be formed by a rear plate 311 which is substantially opaque. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In various embodiments, the rear plate 311 and the side bezel structure 318 may be integrally formed and include the same material (e.g., a metallic material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In various embodiments, the front plate 302 (or the rear plate 311) may include only one of the first areas 310D (or the second areas 310E). In another embodiment, some of the first areas 310D or the second areas 310E may not be included. In these embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, and 314, sensor modules 304, 316, and 319, camera modules 305, 312, and 313 (e.g., the camera module 180 or 280 in FIG. 1 or 2), key input devices 317, a light emitting element 306, or connector holes 308 and 309. In various embodiments, the electronic device 101 may not be provided with at least one (e.g., a key input device 317 or the light emitting element 306) of the components or may additionally include other components.

The display 301 (e.g., the display module 160 in FIG. 1) may be visually exposed, for example, through a substantial portion of the front plate 302. In various embodiments, at least a portion of the display 301 may be exposed through the first surface 310A and the front plate 302 which forms the first areas 310D of the side surface 310C. In various embodiments, a corner of the display 301 may be formed substantially in the same shape as that of an adjacent periphery of the front plate 302. In another embodiment (not shown), a gap between the periphery of the display 301 and the periphery of the front plate 302 may be substantially equal to increase the visually exposed area of the display 301.

In another embodiment (not shown), a recess or an opening may be formed in a portion of a screen display area (e.g., an active area) or an area (e.g., an inactive area) outside the screen display area, and at least one of the audio module 314 (e.g., the audio module 170 in FIG. 1), the sensor module 304 (e.g., the sensor module 176 in FIG. 1), the camera module 305, or the light emitting element 306, which is aligned with the recess or the opening, may be included. In another embodiment (not shown), at least one of the audio module 314, the sensor module 304, the camera modules 305 (e.g., an under display camera (UDC)), a fingerprint sensor 316, or the light emitting element 306 may be included on a rear surface of the screen display area of the display 301. In another embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In some embodiments, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in various embodiments, a plurality of microphones may be disposed to detect the direction of a sound. The speaker holes 307 and 314 may include an external speaker hole 307 and a receiver hole 314 for calls. In various embodiments, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor.

The camera modules 305, 312, and 313 may include a front camera module 305 disposed on the first surface 310A of the electronic device 101, and a rear camera module 312 and/or a flash 313 disposed on the second surface 310B. The camera modules 305 and 312 may include one or more lenses, an image sensor, and/or an ISP. The flash 313 may include, for example, a light emitting diode (LED) or a xenon lamp. In various embodiments, two or more lenses (an IR camera, a wide-angle lens, and a telephoto lens) and image sensors may be arranged on one surface of the electronic device 300.

The key input devices 317 may be disposed on the side surface 310C of the housing 310. In another embodiment, the electronic device 300 may not include some or any of the key input devices 317, and the key input devices 317 which are not included may be implemented in other forms such as soft keys on the display 301. In various embodiments, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In another embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

[Embodiment 1]

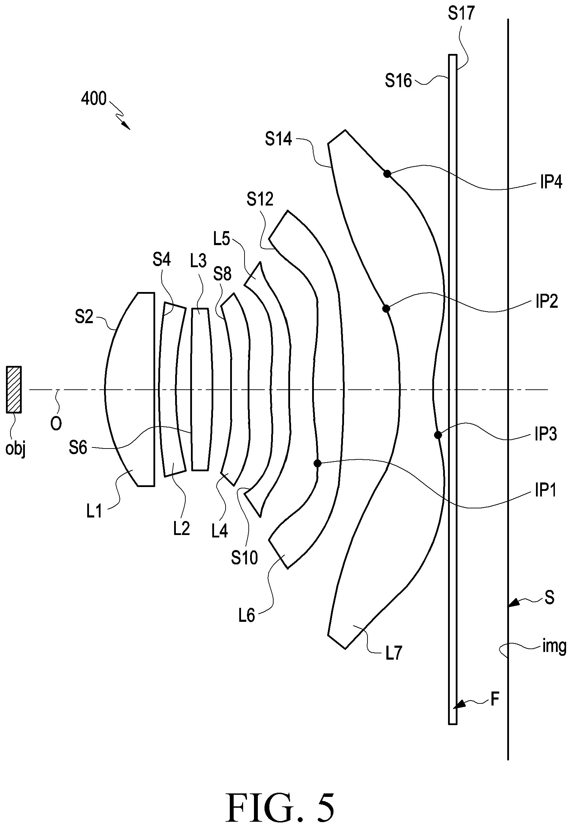

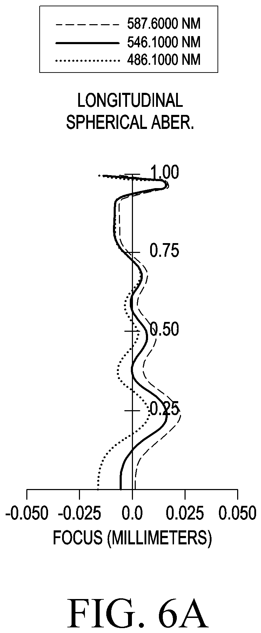

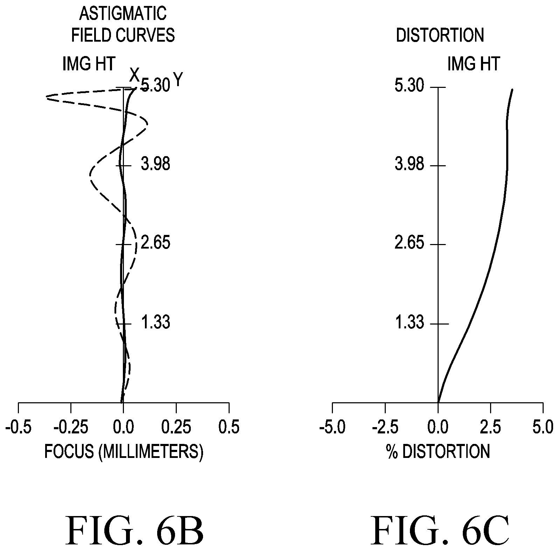

FIG. 5 is a configuration diagram illustrating a lens assembly 400 (e.g., the camera module 180 in FIG. 1, the lens assembly 210 in FIG 2, and/or the camera module 280 in FIG. 2) according to an embodiment of the disclosure. FIG. 6A is a graph depicting spherical aberration of a lens assembly according to an embodiment of the disclosure. FIG. 6B is a graph depicting astigmatism of a lens assembly according to an embodiment of the disclosure. FIG. 6C is a graph depicting distortion rates of a lens assembly according to an embodiment of the disclosure.

FIG. 6(a) is a graph illustrating spherical aberration of the lens assembly 400 according to an embodiment of the disclosure, in which a horizontal axis represents coefficients of longitudinal spherical aberration, a vertical axis represents normalized distances from the center of an optical axis O, and variations of the longitudinal spherical aberration according to light wavelengths are illustrated. FIG. 6(b) is a graph depicting astigmatism of the lens assembly 400 according to an embodiment of the disclosure, and FIG. 6(c) is a graph depicting distortion rates of the lens assembly 400 according to an embodiment of the disclosure.

Referring to FIGS. 5, 6A, 6B, and 6C, the lens assembly 400 (e.g., the camera module 280 including the lens assembly 210 and/or the image sensor 230 in FIG. 2) according to an embodiment of the disclosure may include a plurality of (e.g., at least seven) lenses L1, L2, L3, L4, L5, L6, and L7, an IR blocking filter F, and/or an image sensor S (e.g., an imaging plane img). According to an embodiment, the IR blocking filter F may be omitted or replaced by a band pass filter. In an embodiment, the IF blocking filter F and/or the image sensor S (e.g., the image sensor 230 in FIG. 2) may be described as a separate component from the lens assembly 400. For example, the IR blocking filter F and/or the image sensor S or 230 may be mounted on an electronic device (e.g., the electronic device 101, 102, 104, or 300 in FIG. 1 or 3) or an optical device (e.g., the camera module 180 or 280 in FIG. 1 or 2), and the plurality of lenses L1, L2, L3, L4, L5, L6, and L7 included in the lens assembly 400 may be mounted on the electronic device or the optical device, in alignment with the IR blocking filter F and/or the image sensor S or 230 on the optical axis O. In an embodiment, at least one of the lenses L1, L2, L3, L4, L5, L6, and L7 may reciprocate along a direction of the optical axis O, and the electronic device (e.g., the electronic device 101, 102, 104, or 300 in FIG. 1 or 3) or the processor 120 of FIG. 1 may perform focus adjustment or focal length adjustment by reciprocating the at least one of the lenses L1, L2, L3, L4, L5, L6, and L7. In an embodiment, the lens assembly 400 may be disposed as one of the camera modules 305, 312, and 313 in FIG. 3 or 4.

According to an embodiment, the plurality of lenses L1, L2, L3, L4, L5, L6, and L7 may be made of a plastic or glass material and include a first lens L1, a second lens L2, a third lens L3, a fourth lens L4, a fifth lens L5, a sixth lens L6, and/or a seventh lens L7 disposed sequentially along the direction of the optical axis O from an object obj side to the image sensor S or 230 (e.g., the imaging plane img) side. For example, the lenses L1, L2, L3, L4, L5, L6, and L7 may be aligned with the image sensor S or 230 on the optical axis O. In an embodiment, the lens assembly 400 may further include an aperture disposed between any two adjacent lenses among the lenses L1, L2, L3, L4, L5, L6, and L7. In an embodiment, an object-side surface or image sensor-side surface of any one of the lenses L1, L2, L3, L4, L5, L6, and L7 may be provided as an aperture. In an embodiment described later, either an object-side surface S6 or an image sensor-side surface S7 of the third lens L3 may be provided as an aperture.

According to an embodiment, each of the lenses L1, L2, L3, L4, L5, L6, and L7 may include an object-side surface and an image sensor-side surface. In describing the following various embodiments, it is to be noted that no reference numerals are assigned to some of the object-side surface(s) and image sensor-side surface(s) of the lenses L1, L2, L3, L4, L5, L6, and L7, for simplicity of the drawings. For example, in FIG. 5, reference numerals for the object-side surfaces of the lenses L1, L2, L3, L4, L5, L6, and L7 may be written, and reference numerals for the image sensor-side surfaces thereof may be omitted. In the following detailed description, reference numeral 'S(2d)' or S(2d+1)' may be assigned to the object-side surface(s) or image sensor-side surface(s) of the lens(es) by citing a natural number 'd'. For example, 'S(2d)' may be understood as the object-side surface of a $d^{th}$ lens, and 'S(2d+1)' may be understood as the image sensor-side surface of the $d^{th}$ lens. Reference numerals which are not assigned to lens surfaces in the drawings will be readily understood from the tables described later with respect to lens data in various embodiments. In the later-described tables, symbol '*' may be added to an aspheric lens surface, and some reference numerals related to lens surfaces may not refer to actual lens surfaces. For example, although not shown in the drawings, a reference position of a structure for disposing a cover window may be described as 'S1' in the tables, and although not shown in the drawings, the reference numerals of the lens surfaces may be assigned in the tables in describing the positions of structures considered in the design of the lens assembly 400. In an embodiment, a surface provided as an aperture among the lens surfaces may also be labeled with 'sto', and 'S16' and 'S17' may denote the object-side surface and image sensor-side surface of the IR blocking filter F.

In the following detailed description, the shapes of the object-side or image sensor-side surfaces of the lenses L1, L2, L3, L4, L5, L6, and L7 may be described using the term 'concave' or 'convex'. Unless otherwise mentioned, such references to the shapes of the lens surfaces may describe the shape of a point intersecting the optical axis O. When it is said that an 'object-side surface is concave', this may describe a shape in which the center of a radius of curvature of the object-side surface is located closer to the object obj than the object-side surface. When it is said that an 'object-side surface is convex', this may describe a shape in which the center of a radius of curvature of the object-side surface is located closer to the image sensor S than the object-side surface. When it is said that an 'image sensor-side surface is concave', this may describe a shape in which the center of a radius of curvature of the image sensor-side surface is located closer to the image sensor than the image sensor-side surface. When it is said that an 'image sensor-side surface is convex', this may describe a shape in which the center of a radius of curvature of the image sensor-side surface is located closer to the object obj than the image sensor-side surface. For example, in FIG. 5, the object-side surface S2 of the first lens L1 may be understood to be convex, and the image sensor-side surface S15 of the seventh lens L7 may be understood to be concave.

According to an embodiment, at least one of the lenses L1, L2, L3, L4, L5, L6, and L7 may be an aspheric lens including an inflection point IP1, IP2, IP3, or IP4. The 'inflection point IP1, IP2, IP3, or IP4' may refer to a boundary between an area where the center of a radius of curvature is located on the object obj side and an area where the center of a radius of curvature is located on the image sensor S side, on one lens surface. For example, the center of the object-side surface S13 of the sixth lens L6 may have the center of a radius of curvature located on the image sensor S side, and a periphery around the center may have the center of a radius of curvature located on the object obj side. As such, a point at which the position of a radius of curvature changes may be referred to as the inflection point IP1, IP2, IP3, or IP4. In FIG. 5, at least one of the sixth lens L6 or the seventh lens L7 may be an aspheric lens including at least one inflection point, and the number of inflection points that lens(es) have is not limited to the illustrated embodiment. When the lens assembly 400 includes at least one aspheric lens or at least one aspheric lens including the inflection point IP1, IP2, IP3, or IP4, field curvature may be easily improved.

According to an embodiment, the first lens L1 disposed first from the object obj side may be a plastic lens which has a positive refractive power and includes a convex object side-surface S2. However, the embodiment(s) of the disclosure are not limited thereto, and the first lens L1 may be a glass lens according to the design specifications of the lens assembly 400 or the electronic device (e.g., the electronic device 101, 102, 104, or 300 in FIG. 1, 3, or 4). When the first lens L1 has a positive refractive power, the total intensity of luminous flux may be reduced, facilitating miniaturization of the lens assembly 400 and reduction of an F-number to approximately 2.0 or less, and the F-number may be approximately 1.7 or larger according to an embodiment. According to an embodiment, when the lens assembly 400 has an F-number less than approximately 1.7, the sensitivity of spherical aberration may increase, thereby making manufacturing difficult, and when the F-number is larger than approximately 2.0, the quality of an image captured in a dark environment may be degraded.

According to an embodiment, the second lens L2 disposed second from the object obj side may have a negative refractive power, and the third lens L3 disposed third from the object obj side may have a sweep angle with a maximum absolute value of 10 degrees or less (and/or approximately 5 degrees or larger) on the object-side surface S6. According to an embodiment, the fourth lens L4 disposed fourth from the object obj side may have a refractive index equal to or larger than approximately 1.6 or equal to or less than approximately 1.7, thereby making it easy to control spherical aberration or coma aberration of a peripheral area. In embodiment(s) of the present disclosure, a 'sweep angle' refers to an inclination angle of a tangent passing through any point(s) on a lens surface (e.g., an object-side surface or an image sensor-side surface), and may be understood as an inclination angle with respect to a plane perpendicular to the optical axis O. In an embodiment, a 'sweep angle' refers to an inclination angle of a normal line passing through any point(s) on a lens surface, and may be understood as an inclination angle with respect to the optical axis O. When the object-side surface S6 of the third lens L3 has a sweep angle larger than 10 degrees, a variation in spherical aberration may increase, degrading image quality. For example, the variation of spherical aberration may be suppressed and image quality may be improved, by controlling the sweep angle of the object-side surface S6 of the third lens L3 to 10 degrees or less.

According to an embodiment, a maximum absolute value of a sweep angles of at least one of the object-side surface S10 or the image sensor-side surface S11 of the fifth lens L5 disposed fifth from the object obj side may be equal to or larger than approximately 45 degrees (and/or equal to or less than approximately 60 degrees). In an embodiment, a maximum absolute value of a sweep angles of at least one of the object side-surface S12 or the image sensor-side surface S13 of the sixth lens L6 disposed sixth from the object obj side may be equal to or larger than 45 degrees. When the maximum absolute value of the sweep angle of the fifth lens L5 and/or the sixth lens L6 is equal to or larger than 45 degrees, it may be easy to suppress field curvature and control coma aberration of a peripheral area. For example, when the sweep angle of the fifth lens L5 or the sixth lens L6 satisfies the above condition, miniaturization of the lens assembly 400 may be facilitated.

According to an embodiment, the seventh lens L7 disposed seventh from the object obj side may have a negative refractive power and include a convex object-side surface S14 and a concave image sensor-side surface S15. For example, the object side-surface S14 of the seventh lens L7 may be an aspheric surface with at least one inflection point IP2. In an embodiment, the image sensor-side surface S15 of the seventh lens L7 may be an aspheric surface with at least one inflection point IP3 and IP4. When at least one of the lenses L1, L2, L3, L4, L5, L6, and L7 is an aspheric lens or at least one of the lens surfaces includes an inflection point, aberration control of the lens assembly 400 is easy, which may be useful for increasing optical performance. According to an embodiment, the seventh lens L7 may have an abbe number equal to or larger than approximately 50 and equal to or less than approximately 60, and when the seventh lens L7 satisfies this condition, the chromatic aberration of the lens assembly 400 may be easily controlled.

According to an embodiment, at least one of the lens surfaces may be finished or coated to have a reflectance of approximately 0.3% or less with respect to visible light. According to an embodiment, when incident light is reflected by a lens surface or internal structure inside the lens assembly 400, image quality may be degraded. For example, the optical performance of the lens assembly 400 may be stabilized by decreasing the reflectance of the lenses L1, L2, L3, L4, L5, L6, and L7 that transmit, focus, and/or guide light incident from the outside. In an embodiment, as the reflectance of the lenses L1, L2, L3, L4, L5, L6, and L7 decreases, the resolution of the lens assembly 400 may be improved, and the fifth lens L5 or the sixth lens L6 may be easily manufactured into a shape that satisfies the condition mentioned above regarding the sweep angle. According to an embodiment, when the fifth lens L5 or sixth lens L6 satisfies the condition mentioned above regarding the sweep angle, it may be easy to suppress field curvature or control coma aberration, and the lens assembly 400 may be miniaturized.

According to an embodiment, as the reflectance of a lens surface, the shape (e.g., sweep angle) of a lens surface, and/or the refractive index of a lens (e.g., the fourth lens) is controlled, the lens assembly 400 may satisfy the conditions of the equations described below. For example, the lens assembly 400 may satisfy the condition of [Equation 1] below.

$$[\text{Equation 1}]$$
$$0.3 \leq \frac{CTsum}{TTL} \leq 0.6$$

Herein, 'CTsum' may be the sum of the thicknesses of the lenses L1, L2, L3, L4, L5, L6, and L7 measured on the optical axis, and 'TTL' may be the distance from the object-side surface S2 of the first lens L1 to the imaging plane img of the image sensor S. When the calculated value of [Equation 1] is less than 0.3, the thicknesses of the lenses L1, L2, L3, L4, L5, L6, and L7 may be too small, causing difficulty in manufacturing. In an embodiment, when the calculated value of [Equation 1] is greater than 0.6, there may be difficulties in miniaturizing the lens assembly 400.

According to an embodiment, the lens assembly 400 may satisfy the condition of [Equation 2] below.

[Equation 2]

$$2.0 \le \frac{L1F}{L1R1} \le 3.0$$

Herein, 'L1F' may be the focal length of the first lens L1, 'L1R1' may be the radius of curvature of the object side-surface S2 of the first lens L1, and the 'radius of curvature' of the lens surface may be understood as the radius of curvature of a point intersecting the optical axis O. When the lens assembly 400 satisfies the condition of [Equation 2], control of spherical aberration or manufacturing of the lens assembly 400 may be facilitated, and the lens assembly 400 may be miniaturized. For example, when the calculated value of [Equation 2] is less than 2.0, the lenses may be larger in controlling spherical aberration, and when the calculated value of [Equation 2] is greater than 3.0, the sensitivity of the lenses L1, L2, L3 L4, L5, L6, and L7 may increase, making their manufacturing difficult.

According to an embodiment, the lens assembly 400 may satisfy the condition of [Equation 3] below.

[Equation 3]

$$5.0 \le \frac{L7R1}{L7R2} \le 15$$

Herein, 'L7R1' may be the radius of curvature of the object-side surface S14 of the seventh lens L7, and 'L7R2' may be the radius of curvature of the image sensor-side surface S15 of the seventh lens L7. When the lens assembly 400 satisfies the condition of [Equation 3], control of distortion aberration or manufacturing of the lenses L1, L2, L3, L4, L5, L6, and L7 may be facilitated. For example, when the calculated value of [Equation 3] is less than 5.0, there may be difficulties in controlling the distortion aberration, and when the calculated value of [Equation 3] is greater than 15, it may be difficult to manufacture the lenses L1, L2, L3, L4, L5, L6, and L7 due to their increased sensitivity.

According to an embodiment, the lens assembly 400 may satisfy the condition of [Equation 4] below.

[Equation 4]

$$0.8 \le \frac{F}{L1F} \le 1.5$$

Herein, 'F' may be the focal length of the entire lens assembly 400, and 'L1F' may be the focal length of the first lens L1. When the lens assembly 400 satisfies the condition of [Equation 4], miniaturization may be facilitated and sensitivity to field curvature may be suppressed. For example, when the calculated value of [Equation 4] is less than 0.8, there may be difficulties in miniaturizing the lens assembly 400, and when the calculated value of [Equation 4] is greater than 1.5, the sensitivity to field curvature may increase, thereby degrading the quality of a captured image.

The lens assembly 400, 500, 600, or 700 in this [Embodiment 1] and/or [Embodiment 2] to [Embodiment 4] described below may satisfy the conditions of [Equation 1] to [Equation 4] and/or the condition regarding the maximum absolute value of the sweep angle of the lens surface(s), as illustrated in [Table 1] and [Table 2] below.

[Table 1]

|  | Equation 1 | Equation 2 | Equation 3 | Equation 4 |
|---|---|---|---|---|
| Embodiment 1 | 0.46 | 2.33 | 12.70 | 1.08 |
| Embodiment 2 | 0.46 | 2.21 | 6.93 | 1.12 |
| Embodiment 3 | 0.46 | 2.44 | 6.56 | 1.02 |
| Embodiment 4 | 3.44 | 2.44 | 6.83 | 1.02 |

[Table 2]

| Sweep angle (absolute value) | Object side-surface of third lens | Object side-surface of fifth lens | Image sensor side-surface of fifth lens | Object side-surface of sixth lens | Image sensor side-surface of sixth lens |
|---|---|---|---|---|---|
| Embodiment 1 | 6.37 | 51.44 | 35.06 | 50.03 | 56.39 |
| Embodiment 2 | 6.83 | 50.81 | 40.06 | 54.13 | 47.01 |

(continued)

| Sweep angle (absolute value) | Object side-surface of third lens | Object side-surface of fifth lens | Image sensor side-surface of fifth lens | Object side-surface of sixth lens | Image sensor side-surface of sixth lens |
|---|---|---|---|---|---|
| Embodiment 3 | 6.01 | 81.67 | 38.24 | 50.22 | 55.42 |
| Embodiment 4 | 6.97 | 52.11 | 37.64 | 50.47 | 55.20 |

As such, the lens assembly 400 may be implemented as a miniaturized lens assembly with a slim factor of approximately 0.6 or less by satisfying at least one of the above-described conditions. The 'slim factor' may be understood as the ratio of the total length (e.g., 'TTL' in [Equation 1]) of the lens assembly 400 to the diagonal length of the image sensor S.

According to an embodiment, the object side-surface S6 of the third lens L3 may be provided as an aperture in the lens assembly 400 of FIG. 5. Although not shown, the lens assembly 400 may further include an optical member (e.g., a reflective member or a refractive member) disposed closer to the object obj than the first lens L1. The optical member may reflect or refract light incident from a direction different from the optical axis O, and guide or focus the light to the first lens L1 along the optical axis O. When the optical member is included, the object obj of FIG. 5 may be at a position other than the illustrated position. In an embodiment, the lens assembly 400 may have a focal length of approximately 5.09mm, an F-number of approximately 1.89, and/or a total length of approximately 5.77mm. The lens assembly 400 and/or the lenses L1, L2, L3, L4, L5, L6, and L7 may be manufactured to exemplary specifications illustrated in [Table 3] below, while satisfying the above-described conditions regarding the reflectances, refractive powers, lens surface shapes (e.g., sweep angles), and/or refractive indexes of the lens surfaces.

[Table 3]

| Lens surface | Radius of curvature (R) | Thickness or air gap | Effective radius | Focal length | Refractive index | Abbe number |
|---|---|---|---|---|---|---|
| obj | Infinity | infinity | | | | |
| S1 | Infinity | 0.00000 | | | | |
| S2* | 2.03328 | 0.68498 | 1.39000 | 4.730 | 1.54401 | 55.99 |
| S3* | 8.40545 | 0.08580 | 1.30200 | | | |
| S4* | 13.08954 | 0.23000 | 1.25407 | -13.634 | 1.67074 | 19.24 |
| S5* | 5.38340 | 0.22895 | 1.16491 | | | |
| S6*(sto) | 22.17151 | 0.31376 | 1.14843 | 20.674 | 1.53485 | 55.74 |
| S7* | -22.13807 | 0.27480 | 1.16000 | | | |
| S8* | 28.19053 | 0.24000 | 1.23280 | -29.609 | 1.67074 | 19.24 |
| S9* | 11.69381 | 0.33433 | 1.39680 | | | |
| S10* | 5.06976 | 0.24000 | 1.56491 | -25.038 | 1.63490 | 23.96 |
| S11* | 3.78160 | 0.35986 | 1.85834 | | | |
| S12* | 6.22284 | 0.43242 | 2.27856 | 5.017 | 1.56717 | 37.4 |
| S13* | -5.17069 | 0.79117 | 2.60431 | | | |
| S14* | 23.95718 | 0.50000 | 3.51037 | -3.777 | 1.54401 | 55.99 |
| S15* | 1.88588 | 0.22392 | 3.70920 | | | |
| S16 | Infinity | 0.11 | 4.74347 | infinity | 1.51680 | 64.2 |
| S17 | Infinity | | | | | |
| img | Infinity | | | | | |

[Table 4], [Table 5], and [Table 6] below list the aspheric coefficients of the lenses L1, L2, L3, L4, L5, L6, and L7, and the definition of an aspheric surface is given by [Equation 5] below.

[Equation 5]

$$z = \frac{c'y^2}{1+\sqrt{1-(k+1)c'^2 y^2}} + Ay^4 + By^6 + Cy^8 + Dy^{10} + Ey^{12} + Fy^{14} + Gy^{16} + Hy^{18} + Jy^{20} + Ky^{22} + Ly^{24} + My^{26} + Ny^{28} + Oy^{30}$$

Herein, 'z' may represent a distance from the vertex of a lens in the direction of the optical axis O, 'y' may represent a distance in a direction perpendicular to the optical axis O, 'c"' may represent the reciprocal of a radius of curvature at the vertex of the lens, 'k' may represent a Conic constant, and each of 'A', 'B', 'C', 'D', 'E', 'F', 'G', 'H', 'J', ' K', 'L', 'M', 'N', and 'O' may represent an aspheric coefficient. In tables listing aspheric coefficients, 'R' may be understood as the radius of curvature of a lens surface.

[Table 4]

|   | S2 | S3 | S4 | S5 | S6 |
|---|---|---|---|---|---|
| R | 2.03328E+00 | 8.40545E+00 | 1.30895E+01 | 5.38340E+00 | 2.21715E+01 |
| k | -2.07843E+00 | -4.30478E+01 | 4.68001E+01 | 1.38792E+01 | 0.00000E+00 |
| A | 4.19262E-03 | -6.70273E-02 | -2.54264E-02 | -3.39932E-02 | -1.40097E-02 |
| B | 2.09984E-01 | 6.61514E-01 | -5.90228E-02 | 5.31284E-01 | 8.66535E-02 |
| C | -1.26305E+00 | -4.31302E+00 | 2.50616E+00 | -5.15832E+00 | -1.11387E+00 |
| D | 4.93861E+00 | 1.67543E+01 | -2.19182E+01 | 3.08045E+01 | 6.71549E+00 |
| E | -1.33034E+01 | -4.16633E+01 | 1.02868E+02 | -1.22352E+02 | -2.76819E+01 |
| F | 2.54082E+01 | 6.81190E+01 | -3.05554E+02 | 3.38766E+02 | 8.56679E+01 |
| G | -3.50362E+01 | -7.20770E+01 | 6.15720E+02 | -6.72971E+02 | -2.03821E+02 |
| H | 3.51655E+01 | 4.42977E+01 | -8.70051E+02 | 9.73882E+02 | 3.67688E+02 |
| J | -2.56569E+01 | -6.98400E+00 | 8.73009E+02 | -1.02970E+03 | -4.89542E+02 |
| K | 1.34427E+01 | -1.25774E+01 | -6.19602E+02 | 7.87582E+02 | 4.67083E+02 |
| L | -4.92143E+00 | 1.18516E+01 | 3.04232E+02 | -4.24376E+02 | -3.08079E+02 |
| M | 1.19399E+00 | -5.01986E+00 | -9.83377E+01 | 1.52765E+02 | 1.32795E+02 |
| N | -1.72347E-01 | 1.10279E+00 | 1.88268E+01 | -3.29627E+01 | -3.35687E+01 |
| O | 1.11982E-02 | -1.01723E-01 | -1.61742E+00 | 3.22246E+00 | 3.76787E+00 |

[Table 5]

|   | S7 | S8 | S9 | S10 | S11 |
|---|---|---|---|---|---|
| R | -2.21381E+01 | 2.81905E+01 | 1.16938E+01 | 5.06976E+00 | 3.78160E+00 |
| k | 0.00000E+00 | 0.00000E+00 | 0.00000E+00 | -2.17782E+01 | 0.00000E+00 |
| A | -6.34505E-04 | -1.08863E-01 | -9.58129E-02 | -1.86786E-01 | -2.05599E-01 |
| B | -3.59412E-01 | 7.67374E-01 | 2.09607E-01 | 1.21952E-01 | -9.38604E-02 |
| C | 2.88895E+00 | -7.20982E+00 | -6.56452E-01 | -1.18569E-01 | 8.53890E-01 |
| D | -1.45509E+01 | 4.27528E+01 | 1.02273E+00 | 4.31307E-01 | -2.43424E+00 |
| E | 4.69383E+01 | -1.71676E+02 | 3.24629E-01 | -1.08947E+00 | 4.51162E+00 |
| F | -1.01067E+02 | 4.81260E+02 | -5.73093E+00 | 1.51473E+00 | -5.86701E+00 |
| G | 1.48481E+02 | -9.62124E+02 | 1.45001E+01 | -1.26305E+00 | 5.45635E+00 |
| H | -1.49260E+02 | 1.38761E+03 | -2.09559E+01 | 6.37860E-01 | -3.65057E+00 |
| J | 1.00954E+02 | -1.44570E+03 | 1.98697E+01 | -1.81836E-01 | 1.75156E+00 |
| K | -4.39017E+01 | 1.07700E+03 | -1.27720E+01 | 2.16194E-02 | -5.94778E-01 |

(continued)

|   | S7 | S8 | S9 | S10 | S11 |
|---|---|---|---|---|---|
| L | 1.10826E+01 | -5.58962E+02 | 5.52236E+00 | 1.34630E-03 | 1.39089E-01 |
| M | -1.23409E+00 | 1.91834E+02 | -1.53801E+00 | -4.35933E-04 | -2.12632E-02 |
| N | 0.O0000E+00 | -3.91054E+01 | 2.48884E-01 | 0.00000E+00 | 1.91066E-03 |
| O | 0.00000E+00 | 3.58306E+00 | -1.77321E-02 | 0.00000E+00 | -7.64744E-05 |

[Table 6]

|   | S12 | S13 | S14 | S15 |
|---|---|---|---|---|
| R | 6.22284E+00 | -5.17069E+00 | 2.39572E+01 | 1.88588E+00 |
| k | 5.29600E+00 | -6.18722E+00 | 3.00000E+00 | -4.78776E+00 |
| A | 2.62647E-02 | 6.95301E-02 | -1.96943E-01 | -1.52943E-01 |
| B | -9.31478E-02 | -5.50262E-02 | 1.01951E-01 | 1.07967E-01 |
| C | 1.10638E-01 | 7.08354E-02 | -4.13936E-02 | -6.40818E-02 |
| D | -1.19185E-01 | -8.88500E-02 | 1.53412E-02 | 3.00300E-02 |
| E | 1.05669E-01 | 7.74728E-02 | -4.21848E-03 | -1.06751E-02 |
| F | -7.91210E-02 | -4.85509E-02 | 6.85636E-04 | 2.83805E-03 |
| G | 4.78196E-02 | 2.22498E-02 | -3.06448E-05 | -5.62763E-04 |
| H | -2.20878E-02 | -7.45106E-03 | -1.21668E-05 | 8.30013E-05 |
| J | 7.46486E-03 | 1.80939E-03 | 3.12102E-06 | -9.03346E-06 |
| K | -1.78099E-03 | -3.13768E-04 | -3.80641E-07 | 7.13529E-07 |
| L | 2.89069E-04 | 3.77592E-05 | 2.80668E-08 | -3.96753E-08 |
| M | -3.02280E-05 | -2.98951E-06 | -1.27512E-09 | 1.46956E-09 |
| N | 1.83282E-06 | 1.39808E-07 | 3.30284E-11 | -3.25019E-11 |
| O | -4.89324E-08 | -2.92218E-09 | -3.74759E-13 | 3.24377E-13 |

[Embodiment 2]

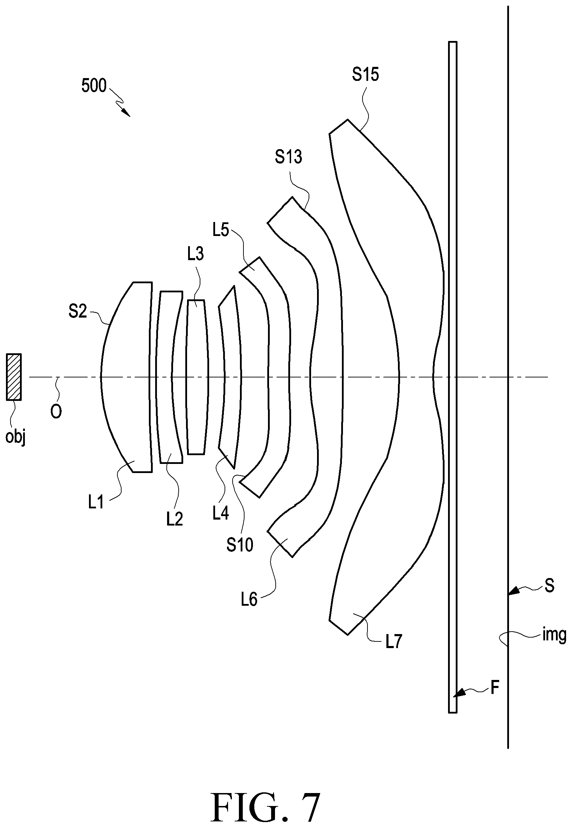

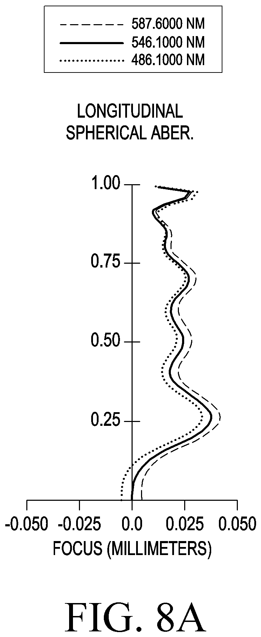

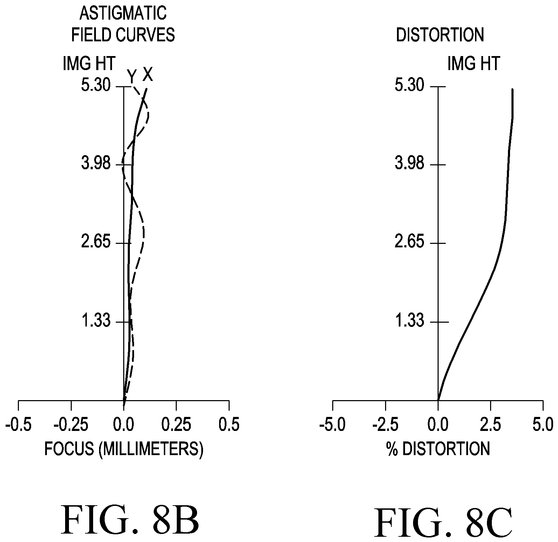

FIG. 7 is a configuration diagram illustrating a lens assembly 500 (e.g., the lens assembly 400 in FIG. 5) according to an embodiment of the disclosure. FIG. 8A is a graph depicting spherical aberration of a lens assembly according to an embodiment of the disclosure. FIG. 8B is a graph depicting astigmatism of a lens assembly according to an embodiment of the disclosure. FIG. 8C is a graph depicting distortion rates of a lens assembly according to an embodiment of the disclosure.

In the lens assembly 500 of FIG. 7, the object side-surface S6 of the third lens L3 may be provided as an aperture, and the lens assembly 500 may further include an optical member not shown, which is disposed closer to the object obj than the first lens L1. In an embodiment, the lens assembly 500 may have a focal length of approximately 5.07mm, an F-number of approximately 1.92, and/or a total length of approximately 5.75mm. The lens assembly 500 and/or the lenses L1, L2, L3, L4, L5, L6, and L7 may be manufactured to exemplary specifications illustrated in [Table 7] below and have aspheric coefficients in [Table 8] to [Table 10], while satisfying the above-described condition(s) regarding the reflectances, refractive powers, lens surface shapes (e.g., sweep angles), and/or refractive indexes of the lens surfaces.

[Table 7]

| Lens surface | Radius of curvature (R) | Thickness or air gap | Effective radius | Focal length | Refractive index | Abbe number |
|---|---|---|---|---|---|---|
| obj | infinity | infinity | | | | |
| S1 | infinity | 0.00000 | | | | |

(continued)

| Lens surface | Radius of curvature (R) | Thickness or air gap | Effective radius | Focal length | Refractive index | Abbe number |
|---|---|---|---|---|---|---|
| S2* | 2.04536 | 0.66987 | 1.38422 | 4.513 | 1.54401 | 55.99 |
| S3* | 10.61538 | 3.08858 | 1.29124 | | | |
| S4* | 25.58568 | 0.23000 | 1.25164 | -13.429 | 1.68042 | 18.15 |
| S5* | 6.77130 | 3.21008 | 1.15976 | | | |
| S6*(sto) | 32.32875 | 3.30132 | 1.14417 | 21.123 | 1.53485 | 55.74 |
| S7* | -17.42375 | 3.22647 | 1.13477 | | | |
| S8* | -387.66155 | 3.24000 | 1.20763 | -36.724 | 1.68042 | 18.15 |
| S9* | 27.08277 | 0.40134 | 1.31985 | | | |
| S10* | 8.00974 | 3.27837 | 1.45931 | -16.324 | 1.63490 | 23.96 |
| S11* | 4.47559 | 3.32625 | 1.76688 | | | |
| S12* | 4.91949 | 3.44014 | 2.16800 | 5.206 | 1.56717 | 37.4 |
| S13* | -7.25870 | 3.80123 | 2.52743 | | | |
| S14* | 12.73297 | 3.50000 | 3.48863 | -3.993 | 1.54401 | 55.99 |
| S15* | 1.83656 | 3.22633 | 3.68885 | | | |
| S16 | infinity | 0.11 | 4.72316 | infinity | 1.51680 | 64.2 |
| S17 | infinity | | | | | |
| img | infinity | | | | | |

[Table 8]

| | | S2 | S3 | S4 | S5 | S6 |
|---|---|---|---|---|---|---|
| | R | 2.04536E+00 | 1.06154E+01 | 2.55857E+01 | 6.77130E+00 | 3.23288E+01 |
| | k | -2.12169E+00 | 6.03617E+00 | -9.00000E+0 1 | 7.96384E+00 | 0.00000E+00 |
| | A | 1.95512E-02 | 3.57841E-03 | 6.13256E-02 | 5.69195E-02 | 4.41980E-02 |
| | B | 2.40819E-02 | -6.02142E-02 | -5.44272E-01 | -4.35661E-01 | -7.29507E-01 |
| | C | -3.81777E-02 | 4.64503E-01 | 4.60490E+00 | 3.48762E+00 | 7.64665E+00 |
| | D | -1.39954E-01 | -3.15995E+00 | -2.57430E+01 | -2.02998E+01 | -5.20667E+01 |
| | E | 9.08191E-01 | 1.33541E+01 | 9.51908E+01 | 8.23057E+01 | 2.32728E+02 |
| | F | -2.53829E+00 | -3.67924E+01 | -2.42129E+02 | -2.36773E+02 | -7.12163E+02 |
| | G | 4.47206E+00 | 6.92599E+01 | 4.36105E+02 | 4.89855E+02 | 1.53561E+03 |
| | H | -5.41751E+00 | -9.14655E+01 | -5.64992E+02 | -7.32358E+02 | -2.37098E+03 |
| | J | 4.63588E+00 | 8.56103E+01 | 5.28477E+02 | 7.88674E+02 | 2.63295E+03 |
| | K | -2.80249E+00 | -5.65349E+01 | -3.53773E+02 | -6.03789E+02 | -2.08597E+03 |
| | L | 1.17110E+00 | 2.57650E+01 | 1.65292E+02 | 3.19595E+02 | 1.15052E+03 |
| | M | -3.21652E-01 | -7.71321E+00 | -5.11961E+01 | -1.10874E+02 | -4.19813E+02 |
| | N | 5.21949E-02 | 1.36531E+00 | 9.44635E+00 | 2.26190E+01 | 9.11141E+01 |
| | O | -3.78817E-03 | -1.08304E-01 | -7.85979E-01 | -2.05093E+00 | -8.90773E+00 |

[Table 9]

|   | S7 | S8 | S9 | S10 | S11 |
|---|---|---|---|---|---|
| R | -1.74237E+01 | -3.87662E+02 | 2.70828E+01 | 8.00974E+00 | 4.47559E+00 |
| k | 0.00000E+00 | 0.00000E+00 | 0.00000E+00 | 3.00000E+00 | 3.00000E+00 |
| A | 1.15989E-03 | -5.37527E-02 | -5.42592E-02 | -2.20358E-01 | -1.90883E-01 |
| B | 1.50446E-01 | 1.78949E-01 | -1.67180E-02 | 8.23592E-01 | 1.41391E-01 |
| C | -3.02074E+00 | -1.31622E+00 | 6.69559E-01 | -5.27827E+00 | -5.12339E-01 |
| D | 2.45199E+01 | 6.51709E+00 | -4.25862E+00 | 2.31149E+01 | 1.88669E+00 |
| E | -1.18857E+02 | -2.42822E+01 | 1.47982E+01 | -6.74303E+01 | -4.36862E+00 |
| F | 3.77508E+02 | 6.66673E+01 | -3.35343E+01 | 1.36356E+02 | 6.69519E+00 |
| G | -8.24354E+02 | -1.34003E+02 | 5.24171E+01 | -1.96541E+02 | -7.11588E+00 |
| H | 1.26957E+03 | 1.96828E+02 | -5.77947E+01 | 2.04724E+02 | 5.36225E+00 |
| J | -1.39179E+03 | -2.10145E+02 | 4.51604E+01 | -1.54414E+02 | -2.88158E+00 |
| K | 1.08020E+03 | 1.60884E+02 | -2.47416E+01 | 8.34754E+01 | 1.09497E+00 |
| L | -5.80096E+02 | -8.59044E+01 | 9.22975E+00 | -3.15055E+01 | -2.86850E-01 |
| M | 2.05043E+02 | 3.03324E+01 | -2.21140E+00 | 7.87714E+00 | 4.91928E-02 |
| N | -4.29154E+01 | -6.35619E+00 | 3.02433E-01 | -1.17143E+00 | -4.96329E-03 |
| O | 4.02960E+00 | 5.97578E-01 | -1.75356E-02 | 7.83727E-02 | 2.23122E-04 |

[Table 10]

|   | S12 | S13 | S14 | S15 |
|---|---|---|---|---|
| R | 4.91949E+00 | -7.25870E+00 | 1.27330E+01 | 1.83656E+00 |
| k | 3.96116E+00 | -1.19808E+01 | 0.00000E+00 | -5.58928E+00 |
| A | 2.54417E-02 | 6.25738E-02 | -2.12666E-01 | -1.44762E-01 |
| B | -1.42896E-01 | -5.63968E-02 | 1.24976E-01 | 1.05092E-01 |
| C | 2.68656E-01 | 8.74014E-02 | -6.62466E-02 | -6.43875E-02 |
| D | -4.08009E-01 | -1.41987E-01 | 2.89100E-02 | 3.05510E-02 |
| E | 4.30681E-01 | 1.48213E-01 | -8.47916E-03 | -1.09099E-02 |
| F | -3.10047E-01 | -1.00945E-01 | 1.55596E-03 | 2.91737E-03 |
| G | 1.51876E-01 | 4.71059E-02 | -1.60839E-04 | -5.83319E-04 |
| H | -4.98223E-02 | -1.55467E-02 | 4.04340E-06 | 8.67664E-05 |
| J | 1.03264E-02 | 3.67945E-03 | 1.31972E-06 | -9.49931E-06 |
| K | -1.10815E-03 | -6.22701E-04 | -2.12158E-07 | 7.51431E-07 |
| L | -9.73145E-06 | 7.37438E-05 | 1.63003E-08 | -4.16237E-08 |
| M | 1.81946E-05 | -5.81485E-06 | -7.26620E-10 | 1.52770E-09 |
| N | -1.99886E-06 | 2.74550E-07 | 1.80581E-11 | -3.33174E-11 |
| O | 7.30395E-08 | -5.87513E-09 | -1.94792E-13 | 3.26527E-13 |

[Embodiment 3]

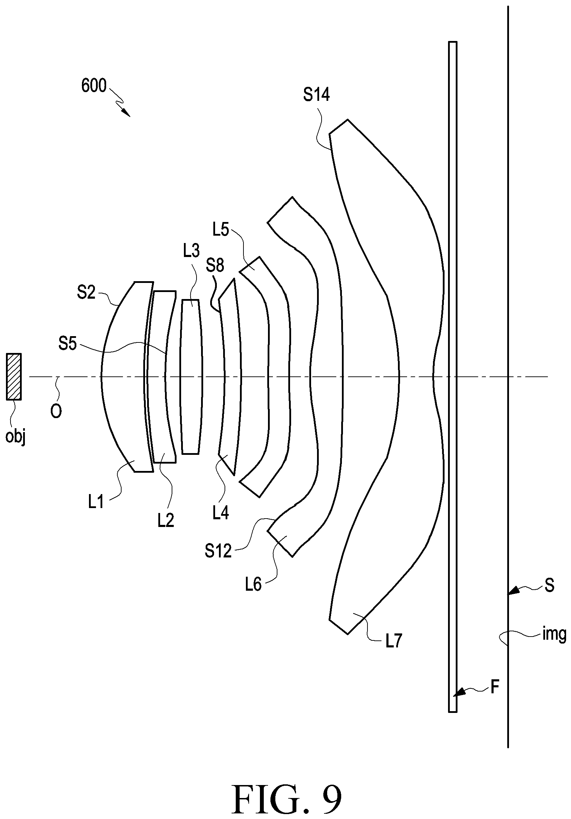

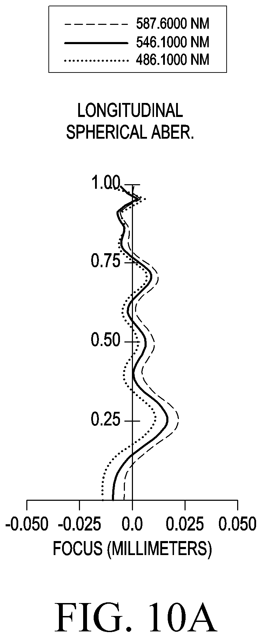

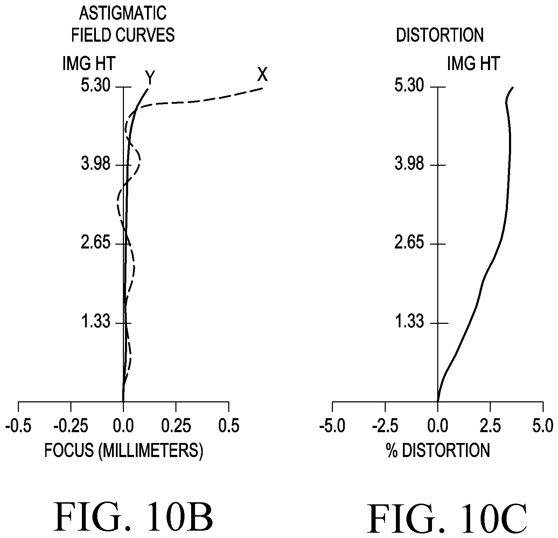

FIG. 9 is a configuration diagram illustrating a lens assembly 600 (e.g., the lens assembly 400 in FIG. 5) according to an embodiment of the disclosure. FIG. 10A is a graph depicting spherical aberration of a lens assembly according to an embodiment of the disclosure. FIG. 10B is a graph depicting astigmatism of a lens assembly according to an embodiment of the disclosure. FIG. 10C is a graph depicting distortion rates of a lens assembly according to an embodiment of the disclosure.

In the lens assembly 600 of FIG. 9, the image sensor side-surface S7 of the third lens L3 may be provided as an aperture, and the lens assembly 600 may further include an optical member not shown, which is disposed closer to the object obj than the first lens L1. In an embodiment, the lens assembly 600 may have a focal length of approximately 5.089mm, an F-number of approximately 1.911, and/or a total length of approximately 5.77mm. The lens assembly 600 and/or the lenses L1, L2, L3, L4, L5, L6, and L7 may be manufactured to exemplary specifications illustrated in [Table 11] below and have aspheric coefficients in [Table 12] to [Table 14], while satisfying the above-described condition(s) regarding the reflectances, refractive powers, lens surface shapes (e.g., sweep angles), and/or refractive indexes of the lens surfaces.

[Table 11]

| Lens surface | Radius of curvature (R) | Thickness or air gap | Effective radius | Focal length | Refractive index | Abbe number |
|---|---|---|---|---|---|---|
| obj | infinity | infinity | | | | |
| S1 | infinity | 0.00000 | | | | |
| S2* | 2.04379 | 0.62939 | 1.34300 | 4.983 | 1.54401 | 55.99 |
| S3* | 7.30781 | 0.03500 | 1.27681 | | | |
| S4* | 5.98418 | 0.23000 | 1.26664 | -13.303 | 1.68042 | 18.15 |
| S5* | 3.56402 | 0.22488 | 1.18267 | | | |
| S6* | 10.35463 | -0.33060 | 1.16428 | 14.537 | 1.53485 | 55.74 |
| S7*(sto) | -31.39754 | 0.32398 | 1.13512 | | | |
| S8* | -76.58424 | 3.24000 | 1.23613 | -32.685 | 1.68042 | 18.15 |
| S9* | 31.95067 | 0.38640 | 1.38000 | | | |
| S10* | 6.71776 | 0.28036 | 1.53000 | -16.955 | 1.63490 | 23.96 |
| S11* | 4.08416 | 0.31633 | 1.84542 | | | |
| S12* | 4.42364 | 0.42739 | 2.20000 | 5.132 | 1.56717 | 37.4 |
| S13* | -8.36347 | 3.79336 | 2.58794 | | | |
| S14* | 11.99628 | 3.50000 | 3.46000 | -4.022 | 1.54401 | 55.99 |
| S15* | 1.82990 | 3.22230 | 3.66000 | | | |
| S16 | infinity | 0.11 | 4.70334 | infinity | 1.51680 | 64.2 |
| S17 | infinity | | | | | |
| img | infinity | | | | | |

[Table 12]

| | S2 | S3 | S4 | S5 | S6 |
|---|---|---|---|---|---|
| R | 2.04379E+00 | 7.30781E+00 | 5.98418E+00 | 3.56402E+00 | 1.03546E+01 |
| k | -1.34268E+00 | 2.44086E+01 | -6.41516E+01 | -7.52662E+00 | 0.00000E+00 |
| A | 1.14105E-02 | 9.63389E-02 | 1.26641E-01 | 8.83424E-03 | -1.48318E-02 |
| B | 9.21281E-02 | -1.22915E+00 | -1.41293E+00 | 6.41980E-02 | 1.21881E-03 |
| C | -7.11764E-01 | 8.25725E+00 | 9.98183E+00 | -1.97148E+00 | 3.48358E-01 |
| D | 3.59271E+00 | -3.66402E+01 | -4.63193E+01 | 1.64652E+01 | -4.42147E+00 |
| E | -1.19284E+01 | 1.13696E+02 | 1.47918E+02 | -7.62486E+01 | 2.44394E+01 |
| F | 2.70179E+01 | -2.54884E+02 | -3.36645E+02 | 2.26270E+02 | -8.04358E+01 |
| G | -4.29086E+01 | 4.19762E+02 | 5.57742E+02 | -4.58599E+02 | 1.74960E+02 |

(continued)

|   | S2 | S3 | S4 | S5 | S6 |
|---|---|---|---|---|---|
| H | 4.85536E+01 | -5.10646E+02 | -6.79138E+02 | 6.55674E+02 | -2.63418E+02 |
| J | -3.93302E+01 | 4.57132E+02 | 6.07299E+02 | -6.69992E+02 | 2.79868E+02 |
| K | 2.26320E+01 | -2.96921E+02 | -3.94008E+02 | 4.87794E+02 | -2.09882E+02 |
| L | -9.03245E+00 | 1.35966E+02 | 1.80427E+02 | -2.47663E+02 | 1.09010E+02 |
| M | 2.37707E+00 | -4.15833E+01 | -5.52825E+01 | 8.34731E+01 | -3.74258E+01 |
| N | -3.71042E-01 | 7.61889E+00 | 1.01690E+01 | -1.68047E+01 | 7.66833E+00 |
| O | 2.60244E-02 | -6.32182E-01 | -8.48971E-01 | 1.53037E+00 | -7. 13478E-01 |

[Table 13]

|   | S7 | S8 | S9 | S10 | S11 |
|---|---|---|---|---|---|
| R | -3.13975E+01 | -7.65842E+01 | 3.19507E+01 | 6.71776E+00 | 4.08416E+00 |
| k | 0.00000E+00 | 0.00000E+00 | 0.00000E+00 | 0.00000E+00 | 0.00000E+00 |
| A | -4.08406E-02 | -1.04671E-01 | -1.01084E-01 | -2.03470E-01 | -1.90785E-01 |
| B | 2.49376E-01 | 5.56991E-01 | 3.28397E-01 | 5.63828E-01 | 6.00523E-02 |
| C | -2.41713E+00 | -4.72549E+00 | -1.68636E+00 | -3.02975E+00 | 3.84976E-02 |
| D | 1.50435E+01 | 2.65331E+01 | 6.27848E+00 | 1.21274E+01 | 3.04237E-03 |
| E | -6.34255E+01 | -1.01859E+02 | -1.67379E+01 | -3.28349E+01 | -2.83086E-01 |
| F | 1.85994E+02 | 2.73893E+02 | 3.19160E+01 | 6.18401E+01 | 6.60880E-01 |
| G | -3.86927E+02 | -5.25914E+02 | -4.38419E+01 | -8.31225E+01 | -8.39663E-01 |
| H | 5.77783E+02 | 7.29157E+02 | 4.35913E+01 | 8.07520E+01 | 6.92759E-01 |
| J | -6.20566E+02 | -7.31008E+02 | -3.12956E+01 | -5.67600E+01 | -3.89701E-01 |
| K | 4.74830E+02 | 5.24631E+02 | 1.60197E+01 | 2.85513E+01 | 1.50775E-01 |
| L | -2.52319E+02 | -2.62663E+02 | -5.68616E+00 | -1.00060E+01 | -3.94447E-02 |
| M | 8.84192E+01 | 8.70863E+01 | 1.32591E+00 | 2.31718E+00 | 6.65726E-03 |
| N | -1.83596E+01 | -1.71753E+01 | -1.81980E-01 | -3.18278E-01 | -6.53472E-04 |
| O | 1.70979E+00 | 1.52462E+00 | 1.10779E-02 | 1.96091E-02 | 2.83165E-05 |

[Table 14]

|   | S12 | S13 | S14 | S15 |
|---|---|---|---|---|
| R | 4.42364E+00 | -8.36347E+00 | 1.19963E+01 | 1.82990E+00 |
| k | 2.87423E+00 | -1.06505E+01 | 0.00000E+00 | -4.66380E+00 |
| A | 6.70573E-03 | 5.12981E-02 | -2.20413E-01 | -1.64777E-01 |
| B | -1.15626E-01 | -7.66812E-03 | 1.39768E-01 | 1.23475E-01 |
| C | 2.61772E-01 | -3.72414E-02 | -9.04197E-02 | -7.75494E-02 |
| D | -5.25339E-01 | 4.40308E-02 | 5.24853E-02 | 3.73870E-02 |
| E | 7.53431E-01 | -2.68220E-02 | -2.17528E-02 | -1.34138E-02 |
| F | -7.54673E-01 | 9.91895E-03 | 6.20472E-03 | 3.58119E-03 |
| G | 5.33728E-01 | -2.33597E-03 | -1.23948E-03 | -7.15226E-04 |
| H | -2.69415E-01 | 3.56816E-04 | 1.76433E-04 | 1.06847E-04 |
| J | 9.71645E-02 | -3.52879E-05 | -1.80119E-05 | -1.18417E-05 |

(continued)

|  | S12 | S13 | S14 | S15 |
|---|---|---|---|---|
| K | -2.47654E-02 | 2.21754E-06 | 1.30953E-06 | 9.56130E-07 |
| L | 4.34549E-03 | -8.49263E-08 | -6.61681E-08 | -5.44576E-08 |
| M | -4.98440E-04 | 1.67363E-09 | 2.20652E-09 | 2.06714E-09 |
| N | 3.36020E-05 | 0.00000E+00 | -4.36009E-11 | -4.68217E-11 |
| O | -1.00874E-06 | 0.00000E+00 | 3.85867E-13 | 4.77907E-13 |

[Embodiment 4]

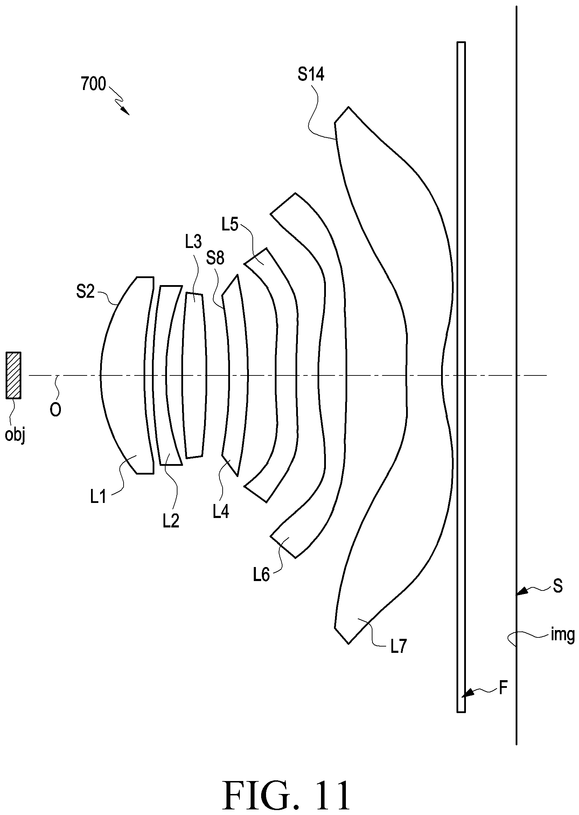

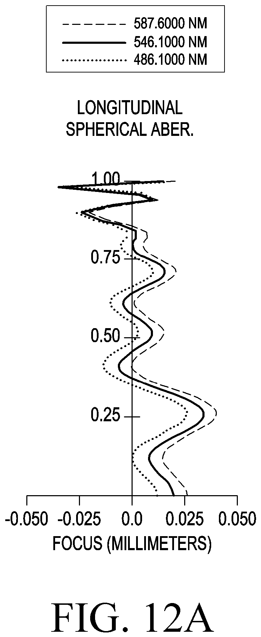

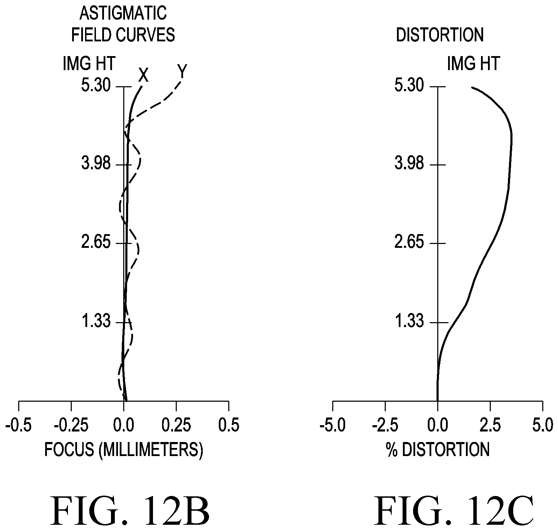

FIG. 11 is a configuration diagram illustrating the lens assembly 700 (e.g., the lens assembly 400 in FIG. 5) according to an embodiment of the disclosure. FIG. 12A is a graph depicting spherical aberration of a lens assembly according to an embodiment of the disclosure. FIG. 12B is a graph depicting astigmatism of a lens assembly according to an embodiment of the disclosure. FIG. 12C is a graph depicting distortion rates of a lens assembly according to an embodiment of the disclosure.

In the lens assembly 700 of FIG. 11, the image sensor side-surface S7 of the third lens L3 may be provided as an aperture, and the lens assembly 700 may further include an optical member not shown, which is disposed closer to the object obj than the first lens L1. In an embodiment, the lens assembly 700 may have a focal length of approximately 5.4mm, an F-number of approximately 1.924, and/or a total length of approximately 6.00mm. The lens assembly 700 and/or the lenses L1, L2, L3, L4, L5, L6, and L7 may be manufactured to exemplary specifications illustrated in [Table 15] below and have aspheric coefficients in [Table 16] to [Table 18], while satisfying the above-described condition(s) regarding the reflectances, refractive powers, lens surface shapes and/or refractive indexes of the lens surfaces.

[Table 15]

| Lens surface | Radius of curvature (R) | Thickness or air gap | -Effective radius | Focal length | Refractive index | Abbe number |
|---|---|---|---|---|---|---|
| obj | infinity | infinity | | | | |
| S1 | infinity | 0.00000 | | | | |
| S2* | 2.17200 | 0.63873 | 1.42760 | 5.305 | 1.54401 | 55.99 |
| S3* | 7.76705 | 0.10000 | 1.34864 | | | |
| S4* | 6.26568 | 0.22075 | 1.31345 | -14.366 | 1.68042 | 18.15 |
| S5* | 3.78200 | 0.22267 | 1.22932 | | | |
| S6* | 9.72888 | 0.33734 | 1.21315 | 15.575 | 1.53485 | 55.74 |
| S7*(sto) | -58.99077 | 0.34553 | 1.18000 | | | |
| S8* | -232.65756 | 0.25257 | 1.30570 | -43.605 | 1.68042 | 18.15 |
| S9* | 34.52255 | 0.41501 | 1.46693 | | | |
| S10* | 7.35426 | 0.28251 | 1.62638 | -16.279 | 1.63490 | 23.96 |
| S11* | 4.24947 | 0.33003 | 1.95318 | | | |
| S12* | 4.71205 | 0.39841 | 2.33858 | 5.334 | 1.56717 | 37.4 |
| S13* | -8.33538 | 0.87555 | 2.69561 | | | |
| S14* | 12.56317 | 0.50120 | 3.67795 | -4.009 | 1.54401 | 55.99 |
| S15* | 1.83881 | 0.23630 | 3.89055 | | | |
| S16 | infinity | 0.11 | 4.80435 | infinity | 1.51680 | 64.2 |
| S17 | infinity | | | | | |
| img | infinity | | | | | |

[Table 16]

|   | S2 | S3 | S4 | S5 | S6 |
|---|---|---|---|---|---|
| R | 2.17200E+00 | 7.76705E+00 | 6.26568E+00 | 3.78200E+00 | 9.72888E+00 |
| k | -1.34464E+00 | 2.42832E+01 | -6.40081E+01 | -7.68016E+00 | 0.00000E+00 |
| A | 2.06236E-02 | 3.25523E-02 | 5.81568E-02 | 3.02521E-03 | -1.72641E-02 |
| B | -9.97324E-02 | -3.45630E-01 | -4.89037E-01 | 1.41188E-01 | 1.41121E-01 |
| C | 6.83370E-01 | 2.17980E+00 | 3.35075E+00 | -1.81585E+00 | -1.50460E+00 |
| D | -2.39721E+00 | -9.76897E+00 | -1.54662E+01 | 1.02294E+01 | 1.07493E+01 |
| E | 4.86295E+00 | 3.08452E+01 | 4.78658E+01 | -3.38369E+01 | -5.31418E+01 |
| F | -5.57706E+00 | -6.94474E+01 | -1.02524E+02 | 7.09292E+01 | 1.79079E+02 |
| G | 2.41042E+00 | 1.12815E+02 | 1.55897E+02 | -9.58144E+01 | -4.15910E+02 |
| H | 2.63939E+00 | -1.33064E+02 | -1.70705E+02 | 7.99252E+01 | 6.75623E+02 |
| J | -5.30462E+00 | 1.13800E+02 | 1.35052E+02 | -3.26226E+01 | -7.73287E+02 |
| K | 4.36319E+00 | -6.97516E+01 | -7.65355E+01 | -6.10403E+00 | 6.20679E+02 |
| L | -2.11005E+00 | 2.98323E+01 | 3.03177E+01 | 1.55396E+01 | -3.41924E+02 |
| M | 6.21347E-01 | -8.44755E+00 | -7.97976E+00 | -8.57708E+00 | 1.23133E+02 |
| N | -1.03577E-01 | 1.42238E+00 | 1.25534E+00 | 2.23974E+00 | -2.61057E+01 |
| O | 7.52486E-03 | -1.07762E-01 | -8.94461E-02 | -2.37549E-01 | 2.47072E+00 |

[Table 17]

|   | S7 | S8 | S9 | S10 | S11 |
|---|---|---|---|---|---|
| R | -5.89908E+01 | -2.32658E+02 | 3.45225E+01 | 7.35426E+00 | 4.24947E+00 |
| k | 0.00000E+00 | 0.00000E+00 | 0.00000E+00 | 0.00000E+00 | 0.00000E+00 |
| A | -5.82410E-02 | -9.00761E-02 | -8.85714E-02 | -1.57998E-01 | -1.62199E-01 |
| B | 6.28540E-01 | 4.29440E-01 | 2.77782E-01 | 3.09539E-01 | 3.94286E-02 |
| C | -5.62313E+00 | -2.75748E+00 | -1.12795E+00 | -1.42750E+00 | 5.01402E-02 |
| D | 3.12501E+01 | 1.15120E+01 | 3.12891E+00 | 5.26741E+00 | -3.63835E-02 |
| E | -1.15812E+02 | -3.34925E+01 | -6.25341E+00 | -1.31659E+01 | -1.24773E-01 |
| F | 2.97866E+02 | 6.98682E+01 | 9.23756E+00 | 2.27698E+01 | 3.19155E-01 |
| G | -5.45227E+02 | -1.06155E+02 | -1.02684E+01 | -2.79606E+01 | -3.80557E-01 |
| H | 7.19841E+02 | 1.18240E+02 | 8.67369E+00 | 2.46979E+01 | 2.83395E-01 |
| J | -6.87064E+02 | -9.62973E+01 | -5.56302E+00 | -1.57180E+01 | -1.41437E-01 |
| K | 4.69468E+02 | 5.65807E+01 | 2.67204E+00 | 7.13236E+00 | 4.81137E-02 |
| L | -2.23793E+02 | -2.33079E+01 | -9.31583E-01 | -2.24781E+00 | -1.10127E-02 |
| M | 7.06470E+01 | 6.37455E+00 | 2.22267E-01 | 4.66867E-01 | 1.62174E-03 |
| N | -1.32663E+01 | -1.03723E+00 | -3.23512E-02 | -5.73830E-02 | -1.38683E-04 |
| O | 1.12138E+00 | 7.57812E-02 | 2.15701E-03 | 3.15738E-03 | 5.23026E-06 |

[Table 18]

|   | S12 | S13 | S14 | S15 |
|---|---|---|---|---|
| R | 4.71205E+00 | -8.33538E+00 | 1.25632E+01 | 1.83881E+00 |
| k | 2.86543E+00 | -1.16584E+01 | 0.00000E+00 | -4.60854E+00 |

(continued)

|  | S12 | S13 | S14 | S15 |
|---|---|---|---|---|
| A | 1.74005E-02 | 3.49246E-02 | -1.80974E-01 | -1.44405E-01 |
| B | -1.59274E-01 | 3.75752E-02 | 9.93735E-02 | 1.06629E-01 |
| C | 4.04645E-01 | -1.01812E-01 | -5.62359E-02 | -6.54139E-02 |
| D | -7.40803E-01 | 9.99434E-02 | 2.90849E-02 | 3.02288E-02 |
| E | 9.08608E-01 | -5.81197E-02 | -1.08021E-02 | -1.02244E-02 |
| F | -7.64875E-01 | 2.19613E-02 | 2.76835E-03 | 2.53658E-03 |
| G | 4.53578E-01 | -5.61330E-03 | -4.98508E-04 | -4.64741E-04 |
| H | -1.92485E-01 | 9.85442E-04 | 6.42419E-05 | 6.30050E-05 |
| J | 5.86465E-02 | -1.17781E-04 | -5.96831E-06 | -6.28494E-06 |
| K | -1.27035E-02 | 9.20055E-06 | 3.97228E-07 | 4.54236E-07 |
| L | 1.90607E-03 | -4.24970E-07 | -1.84969E-08 | -2.30870E-08 |
| M | -1.88045E-04 | 8.82192E-09 | 5.72679E-10 | 7.81176E-10 |
| N | 1.09601E-05 | 0.00000E+00 | -1.05947E-11 | -1.57780E-11 |
| O | -2.85733E-07 | 0.00000E+00 | 8.86349E-14 | 1.43797E-13 |

According to an embodiment of the disclosure, as the reflectance of at least one of the lens surfaces to visible light is controlled to within approximately 0.3%, the degree of freedom in designing the lenses or lens surfaces may be increased. For example, good optical performance may be provided even if the inclination angle of at least one lens surface with respect to the optical axis is increased to approximately 45 degrees or larger. In an embodiment, as the design freedom in the shapes of the lens surfaces increases, miniaturization of the lens assembly may be facilitated. For example, the lens assembly according to embodiment(s) of the disclosure may have improved optical performance by suppressing internal reflection, while being miniaturized. Various other effects directly or indirectly identified through the specification may be provided.

As described above, a lens assembly (e.g., the lens assembly 400 in FIG. 5) and/or an electronic device (e.g., the electronic device 101, 102, 104, or 300 in FIG. 1, FIG. 3, or FIG. 4) including the same according to an embodiment of the disclosure may include at least seven lenses (e.g., the lenses L1, L2, L3, L4, L5, L6, and L7 in FIG. 5) sequentially arranged along a direction of an optical axis (e.g., the optical axis O in FIG. 5) from an object (e.g., the object obj in FIG. 5) side to an image sensor (e.g., the image sensor S in FIG. 5) side, a first lens (e.g., the first lens L1 in FIG. 5) disposed first from the object side among the at least seven lenses may be a plastic lens including a convex object-side surface and having a positive refractive power, a second lens (e.g., the second lens L2 in FIG. 5) disposed second from the object side among the at least seven lenses may have a negative refractive power, an object-side surface (e.g., the surface indicated by 'S6' in FIG. 5) of a third lens (e.g., the third lens L3 in FIG. 5) disposed third from the object side among the at least seven lenses may have a maximum absolute value of a sweep angle of 10 degrees or less, at least one of an object-side surface or an image sensor-side surface of a fifth lens (e.g., the fifth lens L5 in FIG. 5) disposed fifth from the object side among the at least seven lenses may have a maximum absolute value of a sweep angle of 45 degrees or larger, a sixth lens (e.g., the sixth lens L6 in FIG. 5) disposed sixth from the object side among the at least seven lenses may include a concave image sensor side-surface, at least one of an object-side surface or the image sensor-side surface of the sixth lens may have a maximum absolute value of a sweep angle of 45 degrees or larger, a seventh lens (e.g., the seventh lens L7 in FIG. 5) disposed seventh from the object side among the at least seven lenses may be a lens having a negative refractive power, and include an aspheric and convex object side-surface having at least one inflection point (e.g., the point indicated by 'IP2' in FIG. 5) and an aspheric and concave image sensor side-surface having at least one inflection point (e.g., the point indicated by 'IP3' or 'IP4' in FIG. 5), and at least one of the lens surfaces of the at least seven lenses may have a visible light reflectance of 0.3% or less.

According to an embodiment, the lens assembly and/or the electronic device including the same may satisfy [Conditional Expression 1] below.

[Conditional Expression 1]

$$0.3 \leq \frac{CTsum}{TTL} \leq 0.6$$

Herein, 'CTsum' may be a sum of thicknesses of the at least seven lenses measured on the optical axis, and 'TTL' may be a distance from the object-side surface of the first lens to an imaging plane (e.g., the imaging plane img in FIG. 5) of the image sensor.

According to an embodiment, the lens assembly and/or the electronic device including the same may satisfy [Conditional Expression 2] below.

[Conditional Expression 2]

$$2.0 \leq \frac{L1F}{L1R1} \leq 3.0$$

Herein, 'L1F' may be a focal length of the first lens, and 'L1R1' may be a radius of curvature of the object-side surface of the first lens.

According to an embodiment, the lens assembly and/or the electronic device including the same may satisfy [Conditional Expression 3] below.

[Conditional Expression 3]

$$5.0 \leq \frac{L7R1}{L7R2} \leq 15$$

Herein, 'L7R1' may be a radius of curvature of the object-side surface of the seventh lens, and 'L7R2' may be a radius of curvature of the image sensor-side surface of the seventh lens.

According to an embodiment, the lens assembly and/or the electronic device including the same may satisfy [Conditional Expression 4] below.

[Conditional Expression 4]

$$0.8 \leq \frac{F}{L1F} \leq 1.5$$

Herein, 'F' may be a focal length of the entire lens assembly, and 'L1F' may be a focal length of the first lens.

According to an embodiment, a fourth lens (e.g., the fourth lens L4 in FIG. 5) disposed third from the object side among the at least seven lenses may have a refractive index of 1.6 or larger, the seventh lens may have an abbe number of 50 or larger, and the lens assembly and/or the electronic device may satisfy [Conditional Expression 5] below.

[Conditional Expression 5]

$$1.7 \leq Fno \leq 2.0$$

Herein, 'Fno' may be an F-number of the lens assembly.

According to an embodiment, the lens assembly and/or the electronic device including the same may satisfy [Conditional Expression 6] and [Conditional Expression 7] below.

[Conditional Expression 6]

$$0.3 \leq \frac{CTsum}{TTL} \leq 0.6$$

[Conditional Expression 7]

$$2.0 \leq \frac{L1F}{L1R1} \leq 3.0$$

Herein, 'CTsum' may be a sum of thicknesses of the at least seven lenses measured on the optical axis, 'TTL' may be a distance from the object-side surface of the first lens to an imaging plane of the image sensor, 'L1F' may be a focal length of the first lens, and 'L1R1' may be a radius of curvature of the object-side surface of the first lens.

According to an embodiment, the lens assembly and/or the electronic device including the same may satisfy [Conditional Expression 8] and [Conditional Expression 9] below.

$$[\text{Conditional Expression 8}]$$

$$0.3 \leq \frac{CTsum}{TTL} \leq 0.6$$

$$[\text{Conditional Expression 9}]$$

$$5.0 \leq \frac{L7R1}{L7R2} \leq 15$$

Herein, 'CTsum' may be a sum of thicknesses of the at least seven lenses measured on the optical axis, 'TTL' may be a distance from the object-side surface of the first lens to an imaging plane of the image sensor, 'L7R1' may be a radius of curvature of the object-side surface of the seventh lens, and 'L7R2' may be a radius of curvature of the image sensor-side surface of the seventh lens.

A lens assembly (e.g., the lens assembly 400 in FIG. 5) and/or an electronic device (e.g., the electronic device 101, 102, 104, or 300 in FIG. 1, FIG. 3, or FIG. 4) including the same according to an embodiment of the disclosure may include at least seven lenses (e.g., the lenses L1, L2, L3, L4, L5, L6, and L7 in FIG. 5) sequentially arranged along a direction of an optical axis (e.g., the optical axis O in FIG. 5) from an object (e.g., the object obj in FIG. 5) side to an image sensor (e.g., the image sensor S in FIG. 5) side, a first lens (e.g., the first lens L1 in FIG. 5) disposed first from the object side among the at least seven lenses may include a convex object-side surface and a concave image sensor-side surface and have a positive refractive power, a second lens (e. g., the second lens L2 in FIG. 5) disposed second from the object side among the at least seven lenses may have a negative refractive power, a third lens (e.g., the third lens L3 in FIG. 5) disposed third from the object side among the at least seven lenses may have a convex image sensor-side surface, a fourth lens (e.g., the fourth lens L4 in FIG. 5) disposed fourth from the object side among the at least seven lenses may have a refractive index of 1.6 or larger, a fifth lens (e.g., the fifth lens L5 in FIG. 5) disposed fifth from the object side among the at least seven lenses may have a concave image sensor-side surface, a sixth lens (e.g., the sixth lens L6 in FIG. 5) disposed sixth from the object side among the at least seven lenses may include at least one inflection point (e.g., the point indicated by 'IP1' in FIG. 5) on at least one of an object-side surface or an image sensor-side surface thereof, a seventh lens (e.g., the seventh lens L7 in FIG. 5) disposed seventh from the object side among the at least seven lenses may be a lens having an abbe number of 50 or larger, and include an aspheric and convex object-side surface having at least one inflection point (e.g., the point indicated by 'IP2' in FIG. 5) and an aspheric and concave image sensor-side surface having at least one inflection point (e.g., the point indicated by 'IP3' or 'IP4' in FIG. 5), and the lens assembly and/or the electronic device including the same may satisfy [Conditional Expression 10] below.

$$[\text{Conditional Expression 10}]$$

$$1.7 \leq Fno \leq 2.0$$

Herein, 'Fno' may be an F-number of the lens assembly.

According to an embodiment, at least one of the lens surfaces of the at least seven lenses may have a visible light reflectance of 0.3% or less.

According to an embodiment, an object-side surface (e.g., the surface indicated by 'S6' in FIG. 5) of the third lens may have a maximum absolute value of a sweep angle of 10 degrees or less, at least one of an object-side surface or the image sensor-side surface of the fifth lens may have a maximum absolute value of a sweep angle of 45 degrees or larger, and at least one of the object-side surface or the image sensor-side surface of the sixth lens may have a maximum absolute value of a sweep angle of 45 degrees or larger.

According to an embodiment, the lens assembly and/or the electronic device including the same may satisfy [Conditional Expression 11] below.

[Conditional Expression 11]

$$0.3 \le \frac{CTsum}{TTL} \le 0.6$$

Herein, 'CTsum' may be a sum of thicknesses of the at least seven lenses measured on the optical axis, and 'TTL' may be a distance from the object-side surface of the first lens to an imaging plane (e.g., the imaging plane img in FIG. 5) of the image sensor.

According to an embodiment, the lens assembly and/or the electronic device including the same may satisfy [Conditional Expression 12] below.

[Conditional Expression 12]

$$2.0 \le \frac{L1F}{L1R1} \le 3.0$$

Herein, 'L1F' may be a focal length of the first lens, and 'L1R1' may be a radius of curvature of the object-side surface of the first lens.

According to an embodiment, the lens assembly and/or the electronic device including the same may satisfy [Conditional Expression 13] below.

[Conditional Expression 13]

$$5.0 \le \frac{L7R1}{L7R2} \le 15$$

Herein, 'L7R1' may be a radius of curvature of the object-side surface of the seventh lens, and 'L7R2' may be a radius of curvature of the image sensor-side surface of the seventh lens.

According to an embodiment, the lens assembly and/or the electronic device including the same may satisfy [Conditional Expression 14] below.

[Conditional Expression 14]

$$0.8 \le \frac{F}{L1F} \le 1.5$$

Herein, 'F' may be a focal length of the entire lens assembly, and 'L1F' may be a focal length of the first lens.

According to an embodiment of the disclosure, an electronic device (e.g., the electronic device 101, 102, 104, or 300 in FIG. 1, FIG. 3, or FIG. 4) may include at least seven lenses (e.g., the lenses L1, L2, L3, L4, L5, L6, and L7 in FIG. 5) sequentially arranged along a direction of an optical axis (e.g., the optical axis O in FIG. 5) from an object (e.g., the object obj in FIG. 5) side to an image sensor (e.g., the image sensor 230 or S in FIG. 2 or FIG. 5) side, the image sensor aligned with the at least seven lenses on the optical axis and configured to receive light focused or guided by the at least seven lenses, and a processor (e.g., the processor 120 in FIG. 1 or the image signal processor 260 in FIG. 2) configured to obtain an image based on the light received by the image sensor, a first lens (e.g., the first lens L1 in FIG. 5) disposed first from the object side among the at least seven lenses may be a plastic lens including a convex object-side surface and having a positive refractive power, a second lens (e.g., the second lens L2 in FIG. 5) disposed second from the object side among the at least seven lenses may have a negative refractive power, an object-side surface of a third lens (e.g., the third lens L3 in FIG. 5) disposed third from the object side among the at least seven lenses may have a maximum absolute value of a sweep angle of 10 degrees or less, at least one of an object-side surface or an image sensor-side surface of a fifth lens (e.g., the fifth lens L5 in FIG. 5) disposed fifth from the object side among the at least seven lenses may have a maximum absolute value of a sweep angle of 45 degrees or larger, at least one of an object-side surface or an image sensor-side surface of a sixth lens (e.g., the sixth lens L6 in FIG. 5) disposed sixth from the object side among the at least seven lenses may have a maximum absolute value of a sweep angle of 45 degrees or larger, a seventh lens (e.g., the seventh lens L7 in FIG. 5) disposed seventh from the object side among the at least seven lenses may be a lens having a negative refractive power, and include an aspheric and convex object side-surface having at least one inflection point (e.g., the point indicated by 'IP2' in FIG. 5) and an aspheric and concave image sensor side-surface having at least one inflection point (e.g., the point indicated by 'IP3' or 'IP4' in FIG. 5), and at least one of the lens surfaces of the at least seven lenses may have a visible light reflectance of 0.3% or less.

According to an embodiment, the electronic device may satisfy [Conditional Expression 15] below.

[Conditional Expression 15]

$$0.3 \leq \frac{CTsum}{TTL} \leq 0.6$$

Herein, 'CTsum' may be a sum of thicknesses of the at least seven lenses measured on the optical axis, and 'TTL' may be a distance from the object-side surface of the first lens to an imaging plane (e.g., the imaging plane img in FIG. 5) of the image sensor.

According to an embodiment, the electronic device may satisfy [Conditional Expression 16] below.

[Conditional Expression 16]

$$2.0 \leq \frac{L1F}{L1R1} \leq 3.0$$

Herein, 'L1F' may be a focal length of the first lens, and 'L1R1' may be a radius of curvature of the object-side surface of the first lens.

According to an embodiment, the electronic device may satisfy [Conditional Expression 17] below.

[Conditional Expression 17]

$$5.0 \leq \frac{L7R1}{L7R2} \leq 15$$

Herein, 'L7R1' may be a radius of curvature of the object-side surface of the seventh lens, and 'L7R2' may be a radius of curvature of the image sensor-side surface of the seventh lens.

According to an embodiment, the electronic device may satisfy [Conditional Expression 18] below.

[Conditional Expression 18]

$$0.8 \leq \frac{F}{L1F} \leq 1.5$$

Herein, 'F' may be a focal length of the entire lens assembly, and 'L1F' may be a focal length of the first lens.

While the disclosure has been described by way of example with respect to various embodiments, it should be understood that the various embodiments are for illustrative purposes rather than limiting the disclosure. It will be apparent to those skilled in the art that various changes may be made in the form and detailed structure of the disclosure, including the appended claims and their equivalents, without departing from the overall scope of the disclosure.

**Claims**

1. A lens assembly comprising:

   at least seven lenses sequentially arranged along a direction of an optical axis from an object side to an image sensor side,
   wherein a first lens disposed first from the object side among the at least seven lenses is a plastic lens including a convex object-side surface and having a positive refractive power,
   wherein a second lens disposed second from the object side among the at least seven lenses has a negative refractive power,
   wherein an object-side surface of a third lens disposed third from the object side among the at least seven lenses has a maximum absolute value of a sweep angle of 10 degrees or less,
   wherein at least one of an object-side surface or an image sensor-side surface of a fifth lens disposed fifth from the object side among the at least seven lenses has a maximum absolute value of a sweep angle of 45 degrees or larger,
   wherein a sixth lens disposed sixth from the object side among the at least seven lenses includes a concave image sensor side-surface, and at least one of an object-side surface or the image sensor-side surface thereof has a maximum absolute value of a sweep angle of 45 degrees or larger,
wherein a seventh lens disposed seventh from the object side among the at least seven lenses is a lens having a negative refractive power, and includes an aspheric and convex object side-surface having at least one inflection point and an aspheric and concave image sensor side-surface having at least one inflection point, and
wherein at least one of the lens surfaces of the at least seven lenses has a visible light reflectance of 0.3% or less.

2. The lens assembly of claim 1, wherein the lens assembly satisfies [Conditional Expression 1] below,

$$[\text{Conditional Expression 1}]$$
$$0.3 \leq \frac{CTsum}{TTL} \leq 0.6$$

wherein 'CTsum' is a sum of thicknesses of the at least seven lenses measured on the optical axis, and 'TTL' is a distance from the object-side surface of the first lens to an imaging plane of the image sensor.

3. The lens assembly of claim 1, wherein the lens assembly satisfies [Conditional Expression 2] below,

$$[\text{Conditional Expression 2}]$$
$$2.0 \leq \frac{L1F}{L1R1} \leq 3.0$$

wherein 'L1F' is a focal length of the first lens, and 'L1R1' is a radius of curvature of the object-side surface of the first lens.

4. The lens assembly of claim 1, wherein the lens assembly satisfies [Conditional Expression 3] below,

$$[\text{Conditional Expression 3}]$$
$$5.0 \leq \frac{L7R1}{L7R2} \leq 15$$

wherein 'L7R1' is a radius of curvature of the object-side surface of the seventh lens, and 'L7R2' is a radius of curvature of the image sensor-side surface of the seventh lens.

5. The lens assembly of claim 1, wherein the lens assembly satisfies [Conditional Expression 4] below,

$$[\text{Conditional Expression 4}]$$
$$0.8 \leq \frac{F}{L1F} \leq 1.5$$

wherein 'F' is a focal length of the entire lens assembly, and 'L1F' is a focal length of the first lens.

6. The lens assembly of claim 1, wherein a fourth lens disposed third from the object side among the at least seven lenses has a refractive index of 1.6 or larger, the seventh lens has an abbe number of 50 or larger, and the lens assembly satisfies [Conditional Expression 5] below,

$$[\text{Conditional Expression 5}]$$
$$1.7 \leq Fno \leq 2.0$$

wherein 'Fno' is an F-number of the lens assembly.

7. The lens assembly of claim 1, wherein the lens assembly satisfies [Conditional Expression 6] and [Conditional

Expression 7] below,

[Conditional Expression 6]

$$0.3 \leq \frac{CTsum}{TTL} \leq 0.6$$

[Conditional Expression 7]

$$2.0 \leq \frac{L1F}{L1R1} \leq 3.0$$

wherein 'CTsum' is a sum of thicknesses of the at least seven lenses measured on the optical axis, 'TTL' is a distance from the object-side surface of the first lens to an imaging plane of the image sensor, 'L1F' is a focal length of the first lens, and 'L1R1' is a radius of curvature of the object-side surface of the first lens.

8. The lens assembly of claim 1, wherein the lens assembly satisfies [Conditional Expression 8] and [Conditional Expression 9] below,

[Conditional Expression 8]

$$0.3 \leq \frac{CTsum}{TTL} \leq 0.6$$

[Conditional Expression 9]

$$5.0 \leq \frac{L7R1}{L7R2} \leq 15$$

wherein 'CTsum' is a sum of thicknesses of the at least seven lenses measured on the optical axis, 'TTL' is a distance from the object-side surface of the first lens to an imaging plane of the image sensor, 'L7R1' is a radius of curvature of the object-side surface of the seventh lens, and 'L7R2' is a radius of curvature of the image sensor-side surface of the seventh lens.

9. The lens assembly of claim 1, wherein the third lens includes a convex image sensor-side surface,

wherein a fourth lens disposed fourth from the object side among the at least seven lenses has a refractive index of 1.6 or larger,
wherein the fifth lens includes a concave image sensor-side surface,
wherein the sixth lens includes at least one inflection point on at least one of the object-side surface or the image sensor-side surface thereof,
wherein the seventh lens has an abbe number of 50 or larger, and
wherein the lens assembly satisfies [Conditional Expression 10] below,

[Conditional Expression 10]

$$1.7 \leq Fno \leq 2.0$$

wherein 'Fno' is an F-number of the lens assembly.

10. The lens assembly of claim 9, wherein the lens assembly satisfies [Conditional Expression 11] below,

[Conditional Expression 11]

$$0.3 \leq \frac{CTsum}{TTL} \leq 0.6$$

wherein 'CTsum' is a sum of thicknesses of the at least seven lenses measured on the optical axis, and 'TTL' is a distance from the object-side surface of the first lens to an imaging plane of the image sensor.

11. The lens assembly of claim 9, wherein the lens assembly satisfies [Conditional Expression 12] below,

[Conditional Expression 12]

$$2.0 \leq \frac{L1F}{L1R1} \leq 3.0$$

wherein 'L1F' is a focal length of the first lens, and 'L1R1' is a radius of curvature of the object-side surface of the first lens.

12. The lens assembly of claim 9, wherein the lens assembly satisfies [Conditional Expression 8] below,

[Conditional Expression 13]

$$5.0 \leq \frac{L7R1}{L7R2} \leq 15$$

wherein 'L7R1' is a radius of curvature of the object-side surface of the seventh lens, and 'L7R2' is a radius of curvature of the image sensor-side surface of the seventh lens.

13. The lens assembly of claim 9, wherein the lens assembly satisfies [Conditional Expression 14] below,

[Conditional Expression 14]

$$0.8 \leq \frac{F}{L1F} \leq 1.5$$

wherein 'F' is a focal length of the entire lens assembly, and 'L1F' is a focal length of the first lens.

14. An electronic device comprising:

the lens assembly of any one of claims 1 to 13;
the image sensor aligned with the at least seven lenses on the optical axis and configured to receive light focused or guided by the at least seven lenses; and
a processor configured to obtain an image based on the light received by the image sensor.

FIG. 1

EP 4 481 459 A1

200

280

CAMERA MODULE

220

FLASH

210

230

IMAGE SENSOR

LENS ASSEMBLY

240

IMAGE STABILIZER

250

MEMORY

260

IMAGE SIGNAL PROCESSOR

# FIG. 2

FIG. 3

FIG. 4

FIG. 5

FIG. 6A

FIG. 6B

FIG. 6C

FIG. 7

FIG. 8A

ASTIGMATIC
FIELD CURVES
IMG HT
5.30

3.98

2.65

1.33

-0.5  -0.25  0.0  0.25  0.5
FOCUS (MILLIMETERS)

FIG. 8B

DISTORTION
IMG HT
5.30

3.98

2.65

1.33

-5.0  -2.5  0.0  2.5  5.0
% DISTORTION

FIG. 8C

FIG. 9

FIG. 10A

FIG. 10B

FIG. 10C

FIG. 11

FIG. 12A

ASTIGMATIC
FIELD CURVES

IMG HT

X    Y

5.30

3.98

2.65

1.33

-0.5   -0.25   0.0   0.25   0.5

FOCUS (MILLIMETERS)

# FIG. 12B

DISTORTION

IMG HT

5.30

3.98

2.65

1.33

-5.0   -2.5   0.0   2.5   5.0

% DISTORTION

# FIG. 12C

| INTERNATIONAL SEARCH REPORT | International application No. |
|---|---|
| | **PCT/KR2022/020563** |

**A.    CLASSIFICATION OF SUBJECT MATTER**

**G02B 13/00**(2006.01)i; **G02B 9/64**(2006.01)i; **G02B 13/18**(2006.01)i; **G03B 17/12**(2006.01)i; **H04N 23/00**(2023.01)i

According to International Patent Classification (IPC) or to both national classification and IPC

**B.    FIELDS SEARCHED**

Minimum documentation searched (classification system followed by classification symbols)

G02B 13/00(2006.01); G02B 13/06(2006.01); G02B 13/18(2006.01); G02B 9/64(2006.01); G03B 17/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제7렌즈(seventh lens), 스윕 각도(sweep angle), 변곡점(deflection point), 반사율 (reflectance)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0077660 A (SAMSUNG ELECTRO-MECHANICS CO., LTD.) 25 June 2021 (2021-06-25) See paragraphs [0015]-[0028] and figure 1. | 1-14 |
| A | CN 110879455 B (LARGAN PRECISION CO., LTD.) 07 September 2021 (2021-09-07) See paragraphs [0173]-[0179] and figure 1. | 1-14 |
| A | KR 10-1837371 B1 (DIOSTECH) 12 March 2018 (2018-03-12) See paragraphs [0023]-[0034] and figure 1a. | 1-14 |
| A | JP 2015-179228 A (OPTICAL LOGIC INC. et al.) 08 October 2015 (2015-10-08) See claim 1 and figure 1. | 1-14 |
| A | CN 110082888 A (LARGAN PRECISION CO., LTD.) 02 August 2019 (2019-08-02) See claim 1 and figure 1A. | 1-14 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2023** | **24 March 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2022/020563** |

| Patent document cited in search report | | | Publication date (day/month/year) | Patent family member(s) | | | Publication date (day/month/year) |
|---|---|---|---|---|---|---|---|
| KR | 10-2021-0077660 | A | 25 June 2021 | CN | 112099188 | A | 18 December 2020 |
| | | | | CN | 211506000 | U | 15 September 2020 |
| | | | | KR | 10-2020-0143838 | A | 28 December 2020 |
| | | | | KR | 10-2022-0047738 | A | 19 April 2022 |
| | | | | KR | 10-2270301 | B1 | 30 June 2021 |
| | | | | KR | 10-2385182 | B1 | 11 April 2022 |
| | | | | US | 11256068 | B2 | 22 February 2022 |
| | | | | US | 2020-0393654 | A1 | 17 December 2020 |
| | | | | US | 2022-0137374 | A1 | 05 May 2022 |
| CN | 110879455 | B | 07 September 2021 | CN | 110879455 | A | 13 March 2020 |
| | | | | TW | 202011066 | A | 16 March 2020 |
| | | | | TW | I657282 | B | 21 April 2019 |
| | | | | US | 10935760 | B2 | 02 March 2021 |
| | | | | US | 2020-073085 | A1 | 05 March 2020 |
| KR | 10-1837371 | B1 | 12 March 2018 | | None | | |
| JP | 2015-179228 | A | 08 October 2015 | CN | 204188865 | U | 04 March 2015 |
| | | | | JP | 6265334 | B2 | 24 January 2018 |
| | | | | US | 10371925 | B2 | 06 August 2019 |
| | | | | US | 10437011 | B2 | 08 October 2019 |
| | | | | US | 10520702 | B2 | 31 December 2019 |
| | | | | US | 11150443 | B2 | 19 October 2021 |
| | | | | US | 11175477 | B2 | 16 November 2021 |
| | | | | US | 11300762 | B2 | 12 April 2022 |
| | | | | US | 11428900 | B2 | 30 August 2022 |
| | | | | US | 11442250 | B2 | 13 September 2022 |
| | | | | US | 2015-0268448 | A1 | 24 September 2015 |
| | | | | US | 2017-0010449 | A1 | 12 January 2017 |
| | | | | US | 2018-0172950 | A1 | 21 June 2018 |
| | | | | US | 2018-0180845 | A1 | 28 June 2018 |
| | | | | US | 2018-0180846 | A1 | 28 June 2018 |
| | | | | US | 2020-0012074 | A1 | 09 January 2020 |
| | | | | US | 2020-0012075 | A1 | 09 January 2020 |
| | | | | US | 2020-0012076 | A1 | 09 January 2020 |
| | | | | US | 2020-0393650 | A1 | 17 December 2020 |
| | | | | US | 2020-0393651 | A1 | 17 December 2020 |
| | | | | US | 9541730 | B2 | 10 January 2017 |
| | | | | US | 9933597 | B2 | 03 April 2018 |
| CN | 110082888 | A | 02 August 2019 | CN | 110082888 | B | 28 May 2021 |
| | | | | CN | 113189745 | A | 30 July 2021 |
| | | | | CN | 113189745 | B | 29 July 2022 |
| | | | | TW | 201932902 | A | 16 August 2019 |
| | | | | TW | I644142 | B | 11 December 2018 |
| | | | | US | 10663693 | B2 | 26 May 2020 |
| | | | | US | 11067778 | B2 | 20 July 2021 |
| | | | | US | 2019-0227277 | A1 | 25 July 2019 |
| | | | | US | 2020-0241258 | A1 | 30 July 2020 |

Form PCT/ISA/210 (patent family annex) (July 2022)